# EUROPEAN PATENT APPLICATION

(11) **EP 4 447 500 A1**
(43) Date of publication of application: **16.10.2024**
(21) Application number: 23737045.7
(22) Date of filing: 04.01.2023
(51) Int. Cl.: H04W 4/06

(54) **COMMUNICATION METHOD AND APPARATUS**

(30) Priority: 10.01.2022 CN 202210036022
(71) Applicant: Huawei Technologies Co., Ltd., Shenzhen, Guangdong 518129 (CN)
(72) Inventor: ZHANG, Haisen, Shenzhen, Guangdong 518129 (CN); LI, Bingzhao, Shenzhen, Guangdong 518129 (CN); XU, Bin, Shenzhen, Guangdong 518129 (CN)
(74) Representative: Goddar, Heinz J.
(86) International application number: PCT/CN2023/070438
(87) International publication number: WO 2023/131182

(57) **Abstract**

This application provides a communication method and an apparatus. The method is applied to a terminal device. The terminal device includes a first multicast radio bearer MRB, the first MRB includes a first packet data convergence protocol PDCP entity and a first RLC entity, and the first RLC entity uses an acknowledged mode AM. The method includes: The terminal device receives first indication information sent by a source node, where the first indication information indicates to adjust a receive window of the first PDCP entity when the first PDCP entity is re-established; and the terminal device adjusts the receive window of the first PDCP entity based on the first indication information. According to this application, a terminal device configured with an AM MRB can normally receive data of a multicast service during node handover, to avoid a data packet loss, improve continuity of the multicast service and reliability of a multicast propagation manner, and improve user experience.

## Description

This application claims priority to Chinese Patent Application No. 202210036022.8, filed with the China National Intellectual Property Administration on January 10, 2022 and entitled "COMMUNICATION METHOD AND APPARATUS", which is incorporated herein by reference in its entirety.

### TECHNICAL FIELD

This application relates to the communication field, and more specifically, to a communication method and an apparatus.

### BACKGROUND

A multicast transmission technology is a technology in which a network device simultaneously sends same data to a plurality of terminal devices, that is, point-to-multipoint transmission. When the multicast technology is used for transmission, a plurality of terminal devices simultaneously attempt to receive same data in a process in which a network device (for example, a base station) sends the same data. Currently, during data transmission between a network device and terminal devices in a multicast transmission mode, because a transmission failure may occur, data transmission reliability and service continuity are poor, data is disordered, and communication quality and service experience are reduced.

### SUMMARY

This application provides a communication method and an apparatus, to improve adaptability of a multicast service and reliability of a multicast propagation manner, and improve communication efficiency.

According to a first aspect, a communication method is provided. The method is applied to a terminal device, the terminal device includes a first multicast radio bearer MRB, the first MRB includes a first packet data convergence protocol PDCP entity and a first radio link control RLC entity, and the first RLC entity uses an acknowledged mode AM. The method includes:
the terminal device receives first indication information sent by a source node, where the first indication information indicates to adjust a receive window of the first PDCP entity when the first PDCP entity is re-established; and
the terminal device adjusts the receive window of the first PDCP entity based on the first indication information.

For example, the source node may be considered as a source cell, or may be considered as a source access network device.

In this embodiment of this application, when the terminal device configured with an AM MRB performs node handover, a receive window of a PDCP entity corresponding to the AM MRB may be adjusted, so that after the terminal device is handed over to a target node, the terminal device can normally receive data of a multicast service, thereby avoiding a data packet loss, improving adaptability of the multicast service and reliability of a multicast propagation manner, and improving communication efficiency and user experience.

With reference to the first aspect, in some implementations of the first aspect, the first indication information includes second indication information, and the second indication information indicates that an area session ID of the target node is inconsistent with an area session ID of the source node.

That the terminal device adjusts the receive window of the first PDCP entity based on the first indication information includes:
the terminal device initializes a window parameter of the receive window of the first PDCP entity.

With reference to the first aspect, in some implementations of the first aspect, the first indication information includes third indication information, and the third indication information indicates that PDCP serial numbers of the target node and the source node are not synchronized.

That the terminal device adjusts the receive window of the first PDCP entity based on the first indication information includes:
the terminal device initializes a window parameter of the receive window of the first PDCP entity.

With reference to the first aspect, in some implementations of the first aspect, the method further includes:
when a reordering timer is started, the terminal device delivers a data packet buffered by the first PDCP entity.

With reference to the first aspect, in some implementations of the first aspect, the first indication information includes fourth indication information, and the fourth indication information indicates a hyper frame number of the target node.

That the terminal device adjusts the receive window of the first PDCP entity based on the first indication information includes:
the terminal device adjusts the window parameter of the receive window of the first PDCP entity based on a difference between the hyper frame number of the target node and a hyper frame number of the source node.

With reference to the first aspect, in some implementations of the first aspect, the first indication information is included in first information indicating node handover.

According to a second aspect, a communication method is provided. The method includes: A source node sends first indication information to a terminal device, where the first indication information indicates to adjust a receive window of a first packet data convergence protocol PDCP entity when the first PDCP entity is re-established. The terminal device includes a first multicast radio bearer MRB, the first MRB includes the first PDCP entity and a first RLC entity, the first RLC entity uses an acknowledged mode AM, and the first PDCP entity is associated with the first RLC entity.

With reference to the second aspect, in some implementations of the second aspect, before the source node sends the first indication information to the terminal device, the method further includes: The source node sends handover request information to a target node; and the source node receives handover request acknowledgment information, where the handover request acknowledgment information includes indication information indicating to adjust the receive window of the first PDCP entity.

With reference to the second aspect, in some implementations of the second aspect, the first indication information includes second indication information, and the second indication information indicates that an area session ID of the target node is inconsistent with an area session ID of the source node.

With reference to the second aspect, in some implementations of the second aspect, the first indication information includes third indication information, and the third indication information indicates that serial numbers of the target node and the source node are not synchronized.

With reference to the second aspect, in some implementations of the second aspect, the first indication information includes fourth indication information, and the fourth indication information indicates a hyper frame number of the target node.

With reference to the second aspect, in some implementations of the second aspect, the first indication information is included in first information indicating node handover.

According to a third aspect, a communication method is provided. The method includes: A first access network device receives third information sent by a terminal device, where the third information indicates a resource used by the terminal device to receive a multicast service or a capability of supporting receiving a multicast service; and the first access network device configures a data radio bearer DRB for the terminal device based on the first indication information, where the DRB is used to bear a unicast service. The third information includes a quantity of ROHC-Contexts used by the terminal device to receive the multicast service and/or a quantity of EHC-Contexts used by the terminal device to receive the multicast service and/or a quantity of multicast radio bearers MRBs or logical channels LCHs used by the terminal device to receive the multicast service.

Alternatively, the third information includes a maximum quantity of ROHC-Contexts used by the terminal device to support receiving the multicast service and/or a maximum quantity of EHC-Contexts used by the terminal device to support receiving the multicast service and/or a maximum quantity of multicast radio bearers MRBs or logical channels LCHs used by the terminal device to support receiving the multicast service.

The resource used by the terminal device to receive the multicast service may be understood as a resource used when the terminal device is receiving the multicast service; or the resource used by the terminal device to receive the multicast service may be understood as a resource that the terminal device expects to occupy when the terminal device receives the multicast service; or the resource used by the terminal device to receive the multicast service may be understood as a resource planned or reserved by the terminal device for receiving the multicast service; or the resource used by the terminal device to receive the multicast service may be understood as maximum resources that can be used by the terminal device to support receiving the multicast service.

In this embodiment of this application, the terminal device reports, to the first access network device, the resource used for the multicast service, so that the first access network device can configure, for the terminal device based on the resource used for the multicast service, the DRB used for the unicast service, thereby ensuring that a maximum PDCP capability of the terminal device is not exceeded.

According to a fourth aspect, a communication method is provided. The method includes: A terminal device sends third information to a first access network device, so that the first access network device configures a data radio bearer DRB for the terminal device based on the first indication information, where the third information indicates a resource used by the terminal device to receive a multicast service, and the DRB is used to bear a unicast service. The third information includes a quantity of ROHC-Contexts used by the terminal device to receive the multicast service and/or a quantity of EHC-Contexts used by the terminal device to receive the multicast service and/or a quantity of multicast radio bearers MRBs or logical channels LCHs used by the terminal device to receive the multicast service.

Alternatively, the third information includes a maximum quantity of ROHC-Contexts used by the terminal device to support receiving the multicast service and/or a maximum quantity of EHC-Contexts used by the terminal device to support receiving the multicast service and/or a maximum quantity of multicast radio bearers MRBs or logical channels LCHs used by the terminal device to support receiving the multicast service.

The resource used by the terminal device to receive the multicast service may be understood as a resource used when the terminal device is receiving the multicast service; or the resource used by the terminal device to receive the multicast service may be understood as a resource that the terminal device expects to occupy when the terminal device receives the multicast service; or the resource used by the terminal device to receive the multicast service may be understood as a resource planned by the terminal device for supporting receiving the multicast service; or the resource used by the terminal device to receive the multicast service may be understood as maximum resources that can be used by the terminal device to support receiving the multicast service.

With reference to the fourth aspect, in some implementations of the fourth aspect, before the terminal device sends the third information to the first access network device, the method further includes: The terminal device receives data that is of the multicast service and that is sent by a second access network device.

According to a fifth aspect, a communication method is provided. The method includes: A third access network device sends a first data packet to a terminal device by using a first group radio network temporary identifier G-RNTI, where the first data packet corresponds to a first logical channel; and when a first preset condition is met, the third access network device retransmits the first data packet by using a cell radio network temporary identifier C-RNTI; or when a second preset condition is met, the access network device retransmits the first data packet by using the first G-RNTI.

In this embodiment of this application, when RNTIs are multiplexed on the logical channel, and the terminal device does not receive initially transmitted data sent by using a G-RNTI, the third access network device does not perform retransmission by using a C-RNTI, so that a conflict can be effectively avoided, and a case in which the terminal device cannot distinguish, based on only a logical channel identifier, a radio bearer RB or a service to which a data packet in a HARQ retransmission belongs is avoided.

With reference to the fifth aspect, in some implementations of the fifth aspect, the first preset condition is that the third access network device receives a NACK feedback for the first data packet, or a plurality of RNTIs are not multiplexed on the first logical channel; and the second preset condition is that the access network device does not receive a NACK feedback for the first data packet or a timer expires, and a plurality of RNTIs are multiplexed on the first logical channel.

According to a sixth aspect, a communication method is provided. The method includes: A terminal device receives seventh indication information sent by a fourth access network device, where the seventh indication information indicates whether the fourth access network device uses a C-RNTI to scramble and retransmit a data packet that is scrambled by using a G-RNTI during initial transmission, or the seventh indication information indicates whether a logical channel of the terminal device corresponds to a plurality of RNTIs; and when the seventh indication information indicates that the fourth access network device uses the C-RNTI to scramble and retransmit the data packet that is scrambled by using the G-RNTI during initial transmission, the logical channel of the terminal device does not correspond to a plurality of RNTIs; when the seventh indication information indicates that the fourth access network device does not use the C-RNTI to scramble and retransmit the data packet that is scrambled by using the G-RNTI during initial transmission, the logical channel of the terminal device corresponds to a plurality of RNTIs; when the seventh indication information indicates that the logical channel of the terminal device corresponds to a plurality of RNTIs, the terminal device does not use the C-RNTI to receive the retransmitted data packet of the data packet scrambled by using the G-RNTI during initial transmission; or when the seventh indication information indicates that the logical channel of the terminal device does not correspond to a plurality of RNTIs, the terminal device receives, by using the C-RNTI, the retransmitted data packet of the data packet scrambled by using the G-RNTI during initial transmission.

In this embodiment of this application, based on the indication of the fourth access network device, the terminal device may finally determine whether the logical channel corresponds to a plurality of RNTIs or whether the C-RNTI is used to receive the retransmitted data packet of the data packet scrambled by using the G-RNTI during initial transmission, thereby avoiding a conflict.

With reference to the sixth aspect, in some implementations of the sixth aspect, the method further includes: The terminal device sends eighth indication information to the fourth access network device, where the eighth indication information indicates whether the terminal device supports descrambling, by using a C-RNTI, and receiving the retransmitted data packet of the data packet scheduled by using a G-RNTI.

According to a seventh aspect, a communication method is provided. The method is applied to a terminal device, the terminal device includes a first multicast radio bearer MRB, the first MRB includes a first packet data convergence protocol PDCP entity and a first radio link control RLC entity, and the first RLC entity uses an acknowledged mode AM. The method includes:
the terminal device receives first indication information sent by a source node, where the first indication information indicates to adjust a receive window of the first PDCP entity when the first PDCP entity is re-established; and
the terminal device adjusts the receive window of the first PDCP entity based on the first indication information.

For example, the source node may be considered as a source cell, or may be considered as a source access network device.

In this embodiment of this application, when the terminal device configured with an AM MRB performs node handover, a receive window of a PDCP entity corresponding to the AM MRB may be adjusted, so that after the terminal device is handed over to a target node, the terminal device can normally receive data of a multicast service, thereby avoiding a data packet loss, improving adaptability of the multicast service and reliability of a multicast propagation manner, and improving communication efficiency and user experience.

With reference to the seventh aspect, in some implementations of the seventh aspect, the first indication information specifically indicates that an area session ID of the target node is inconsistent with an area session ID of the source node.

That the terminal device adjusts the receive window of the first PDCP entity based on the first indication information includes:
the terminal device initializes a window parameter of the receive window of the first PDCP entity.

With reference to the seventh aspect, in some implementations of the seventh aspect, the first indication information specifically indicates that PDCP serial numbers of the target node and the source node are not synchronized.

That the terminal device adjusts the receive window of the first PDCP entity based on the first indication information includes:
the terminal device initializes a window parameter of the receive window of the first PDCP entity.

With reference to the seventh aspect, in some implementations of the seventh aspect, the method further includes:
when a reordering timer is started, the terminal device delivers a data packet buffered by the first PDCP entity.

With reference to the seventh aspect, in some implementations of the seventh aspect, the first indication information specifically indicates a hyper frame number of the target node.

That the terminal device adjusts the receive window of the first PDCP entity based on the first indication information includes:
the terminal device adjusts the window parameter of the receive window of the first PDCP entity based on a difference between the hyper frame number of the target node and a hyper frame number of the source node.

With reference to the seventh aspect, in some implementations of the seventh aspect, the first indication information is included in first information indicating node handover.

According to an eighth aspect, a communication method is provided. The method includes: A source node sends first indication information to a terminal device, where the first indication information indicates to adjust a receive window of a first packet data convergence protocol PDCP entity when the first PDCP entity is re-established. The terminal device includes a first multicast radio bearer MRB, the first MRB includes the first PDCP entity and a first RLC entity, the first RLC entity uses an acknowledged mode AM, and the first PDCP entity is associated with the first RLC entity.

With reference to the eighth aspect, in some implementations of the eighth aspect, before the source node sends the first indication information to the terminal device, the method further includes: The source node sends handover request information to a target node; and the source node receives handover request acknowledgment information, where the handover request acknowledgment information includes indication information indicating to adjust the receive window of the first PDCP entity.

With reference to the eighth aspect, in some implementations of the eighth aspect, the first indication information specifically indicates that an area session ID of the target node is inconsistent with an area session ID of the source node.

With reference to the eighth aspect, in some implementations of the eighth aspect, the first indication information specifically indicates that serial numbers of the target node and the source node are not synchronized.

With reference to the eighth aspect, in some implementations of the eighth aspect, the first indication information specifically indicates a hyper frame number of the target node.

With reference to the eighth aspect, in some implementations of the eighth aspect, the first indication information is included in first information indicating node handover.

According to a ninth aspect, a communication method is provided. The method includes: A target node receives handover request information sent by a source node, where the source node transmits a data packet of a first service to a first terminal device over a first AM MRB; when the target node determines that a transmission progress of the first AM MRB is slower than a progress of sending a data packet of the first service to a second terminal device by the target node, the target node configures a second AM MRB for the first terminal device, where the second AM MRB is used to transmit a data packet of the first service that has been transmitted by the target node, and PDCP SNs of the second AM MRB and the first AM MRB are synchronized.

It should be understood that the target node supports PDCP SN synchronization.

In this embodiment of this application, when the first terminal device configured with the first AM MRB performs node handover, the target node may configure the second AM MRB for the terminal device when the transmission progress of the first AM MRB is slower than the transmission progress of the target node, to avoid a data packet loss caused by node handover, thereby improving user experience.

With reference to the ninth aspect, in some implementations of the ninth aspect, the method further includes:
when a transmission progress of the second AM MRB is the same as a transmission progress of the first AM MRB, the target node indicates the first terminal device to release or reconfigure the first AM MRB.

According to a tenth aspect, a communication method is provided. The method includes: A source node sends handover request information, and the source node transmits a data packet of a first service to a first terminal device over a first AM MRB; the source node receives handover request acknowledgment information; and when the source node determines that a transmission progress of the first AM MRB is faster than a progress of sending a data packet of the first service to a second terminal device by a target node, the source node indicates the first terminal device to reconfigure the first AM MRB.

In this embodiment of this application, when the first terminal device configured with the first AM MRB performs node handover, the source node may reconfigure the first AM MRB when the transmission progress of the first AM MRB is faster than the transmission progress of the target node, to avoid a data packet loss caused by node handover, thereby improving user experience.

According to an eleventh aspect, a communication apparatus is provided. The apparatus is configured to perform the method in any one of the possible implementations of the first aspect to the sixth aspect. Specifically, the apparatus may include units and/or modules, for example, a processing unit and/or a communication unit, configured to perform the method in any one of the possible implementations of the first aspect to the sixth aspect. In an implementation, the apparatus is a communication device (for example, a terminal device, or for another example, a network device). When the apparatus is a communication device, the communication unit may be a transceiver or an input/output interface, and the processing unit may be at least one processor. Optionally, the transceiver may be a transceiver circuit. Optionally, the input/output interface may be an input/output circuit. In another implementation, the apparatus is a chip, a chip system, or a circuit used in a communication device (for example, a terminal device, or for another example, a network device). When the apparatus is a chip, a chip system, or a circuit used in a communication device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a twelfth aspect, a communication apparatus is provided. The apparatus includes at least one processor, configured to execute a computer program or instructions stored in a memory, to perform the method in any one of the possible implementations of the first aspect to the fourth aspect.

Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a communication device (for example, a terminal device, or for another example, a network device).

In another implementation, the apparatus is a chip, a chip system, or a circuit used in a communication device (for example, a terminal device, or for another example, a network device).

According to a thirteenth aspect, this application provides a processor, configured to perform the methods provided in the first aspect to the sixth aspect. Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a fourteenth aspect, a computer-readable storage medium is provided. The computer-readable medium stores program code to be executed by a device, and the program code is used to perform the method in any one of the possible implementations of the first aspect to the sixth aspect.

According to a fifteenth aspect, a computer program product including instructions is provided. When the computer program product runs on a computer, the computer is enabled to perform the method in any one of the possible implementations of the first aspect to the sixth aspect.

According to a sixteenth aspect, a communication system is provided, including the foregoing terminal device and the foregoing access network device.

For beneficial effects of the eleventh aspect to the sixteenth aspect, refer to the beneficial effects of the first aspect to the tenth aspect. Details are not described again.

### BRIEF DESCRIPTION OF DRAWINGS

FIG. 1 is a diagram of data transmission at layers of protocol stacks;
FIG. 2 is a diagram of an architecture of a mobile communication system to which an embodiment of this application is applicable;
FIG. 3 is a schematic flowchart of a communication method according to an embodiment of this application;
FIG. 4 is a schematic flowchart of another example communication method according to an embodiment of this application;
FIG. 5 is a schematic flowchart of another example communication method according to an embodiment of this application;
FIG. 6 is a schematic flowchart of another example communication method according to an embodiment of this application;
FIG. 7 is a schematic flowchart of another example communication method according to an embodiment of this application;
FIG. 8 is a schematic flowchart of another example communication method according to an embodiment of this application;
FIG. 9 is a schematic flowchart of another example communication method according to an embodiment of this application;
FIG. 10 is a schematic flowchart of another example communication method according to an embodiment of this application;
FIG. 11 is a schematic block diagram of an apparatus according to this application; and
FIG. 12 is a schematic block diagram of an apparatus according to this application.

### DESCRIPTION OF EMBODIMENTS

The following describes technical solutions of this application with reference to accompanying drawings.

The technical solutions of embodiments of this application may be applied to various communication systems, such as a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a 5th generation (5th Generation, 5G) system or a new radio (New Radio, NR) system, and a future evolved communication system.

The terminal device in embodiments of this application may also be referred to as user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a future 5G network, or a terminal device in a future evolved public land mobile network (Public Land Mobile Network, PLMN). This is not limited in embodiments of this application.

A network device in embodiments of this application may be a device configured to communicate with a terminal device. The network device may be a base transceiver station (Base Transceiver Station, BTS) in a global system for mobile communications (Global System for Mobile communications, GSM) system or a code division multiple access (Code Division Multiple Access, CDMA) system, a NodeB (NodeB, NB) in a wideband code division multiple access (Wideband Code Division Multiple Access, WCDMA) system, an evolved NodeB (Evolved NodeB, eNB or eNodeB) in an LTE system, or a radio controller in a cloud radio access network (Cloud Radio Access Network, CRAN) scenario. Alternatively, the network device may be a relay node, an access point, a vehicle-mounted device, a wearable device, a network device in a future 5G network, a network device in a future evolved PLMN network, or the like. This is not limited in embodiments of this application.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry an instruction and/or data.

For ease of understanding embodiments of this application, the following describes some terms in embodiments of this application, to help a person skilled in the art have a better understanding.
(1) Network device: is a device that can provide a random access function for a terminal device or a chip that can be disposed in the device. The device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, home evolved NodeB or home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission and reception point, TRP, or transmission point, TP), or the like, may be a gNB or a transmission point (TRP or TP) in a 5G system such as an NR system or one or one group of antenna panels (including a plurality of antenna panels) of a base station in a 5G system, or may be a network node forming a gNB or a transmission point, for example, a baseband unit (BBU) or a distributed unit (distributed unit, DU).
(2) Terminal: is also referred to as user equipment (user equipment, UE), a mobile station (mobile station, MS), a mobile terminal (mobile terminal, MT), or the like, and is a device that provides voice and/or data connectivity for a user. For example, the terminal device is a handheld device, a vehicle-mounted device, or the like that has a wireless connection function. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote surgery (remote medical surgery), or the like.
(3) Multicast transmission technology: may also be referred to as a multimedia broadcast multicast service (multimedia broadcast multicast service, MBMS) technology, may also be referred to as a multicast transmission mode, or may also be referred to as a multicast and broadcast service (multicast and broadcast service, MBS) technology, and is a technology in which a network device simultaneously sends data to a plurality of terminal devices for a specific service. When the multicast technology is used for transmission, a plurality of terminal devices simultaneously attempt to receive same data in a process in which a network device (for example, a base station) sends the same data.
(4) Sending in a multicast (multicast) transmission mode means: When an apparatus sends a transport block (transport block, TB) corresponding to a protocol data unit (protocol data unit, PDU), a group radio network temporary identifier (group radio network temporary identifier, G-RNTI) is used to scramble the PDU, or scramble downlink control information (downlink control information, DCI) corresponding to the PDU, and at the same time, one or more apparatuses receive the same PDU based on the same G-RNTI. Alternatively, transmitting a PDU in a multicast mode may mean that a location of the same PDU is notified to a plurality of apparatuses in a semi-static manner, and the plurality of apparatuses may receive the PDU at the same time. Alternatively, transmitting a PDU in a multicast mode may mean that the PDU is transmitted over a radio bearer established for multicast transmission or transmitted on a channel specially designed for multicast.

Currently, in a standard, one G-RNTI can be used for a plurality of multicast services, and one logical channel can bear both a unicast service and a multicast service, or a plurality of multicast services or unicast services (which may also be referred to as logical channel multiplexing).

In addition, if data transmitted by using a G-RNTI is not received by a terminal device in a same HARQ process, the data may be retransmitted by using a cell radio network temporary identifier (cell radio network temporary identifier, C-RNTI) or a G-RNTI.

Receiving in the multicast transmission mode means: When sending is performed in the multicast mode, one of the plurality of receiving apparatuses attempts to receive the PDU based on the G-RNTI, or one of the plurality of receiving apparatuses attempts to receive the PDU over the radio bearer established for multicast transmission or on the channel used for multicast transmission.

In this application, multicast is a specific manner of multicast. Therefore, multicast may also be referred to as multicast, broadcast, or MBS.

(5) Sending in a unicast (unicast) transmission mode means: When an apparatus sends a TB corresponding to a PDU, a cell radio network temporary identifier (cell radio network temporary identifier, C-RNTI) is used to scramble the PDU, or scramble DCI corresponding to the PDU, and only one apparatus attempts to receive the same PDU based on the C-RNTI; or transmitting a PDU in a unicast mode may mean that the PDU is transmitted on a radio bearer established for unicast transmission or transmitted on a channel specially designed for unicast.

Receiving in the unicast transmission mode means: When sending is performed in the unicast mode, the receiving apparatus attempts to receive the PDU based on the C-RNTI, or the apparatus attempts to receive the PDU over the radio bearer established for unicast transmission or on the channel used for unicast transmission.

(6) Sending and receiving in a broadcast (broadcast) transmission mode means: An apparatus sends a TB corresponding to a PDU on a broadcast channel, and all receiving apparatuses may attempt to receive the PDU on the broadcast channel.

A network device and a terminal device that communicate with each other have specific protocol layer structures. For example, a control plane protocol layer structure may include functions of protocol layers such as an RRC layer, a PDCP layer, an RLC layer, a MAC layer, and a physical layer. A user plane protocol layer structure may include functions of protocol layers such as the PDCP layer, the RLC layer, the MAC layer, and the physical layer. The physical layer is located at the lowest layer (layer 1), the MAC layer, the RLC layer, and the PDCP layer belong to the second layer (layer 2), and the RRC layer belongs to the third layer (layer 3). In an implementation, a service data adaptation protocol (service data adaptation protocol, SDAP) layer may be further included above the PDCP layer.

Functions of the protocol layers may be implemented by one node, or may be implemented by a plurality of nodes. For example, in an evolved structure, a radio access network device may include a central unit (central unit, CU) and a distributed unit (distributed unit, DU). A plurality of DUs may be centrally controlled by one CU. The CU and the DU may be divided based on a protocol layer of a radio network. For example, functions of the PDCP layer and a protocol layer above the PDCP layer are set on the CU, and functions of a protocol layer below the PDCP layer, the RLC layer, the MAC layer, and the like are set on the DU.

It should be understood that division based on the protocol layer is merely an example, and division may alternatively be performed based on another protocol layer. For example, division is performed based on the RLC layer. Functions of the RLC layer and a layer above the RLC layer are set on the CU, and a function of a protocol layer below the RLC layer is set on the DU. Alternatively, division is performed at a protocol layer. For example, a part of functions of the RLC layer and a function of a protocol layer above the RLC layer are set on the CU, and a remaining function of the RLC layer and a function of a protocol layer below the RLC layer are set on the DU. In addition, division may alternatively be performed in another manner. For example, division is performed based on a latency. A function whose processing time needs to satisfy a latency requirement is set on the DU, and a function whose processing time does not need to satisfy the latency requirement is set on the CU.

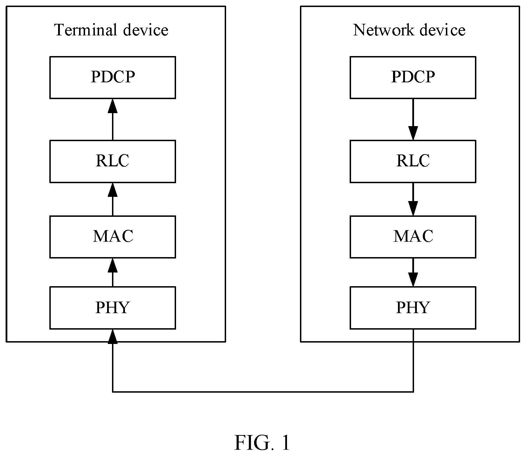

Downlink data transmission is used as an example to describe data transmission between a network device and a terminal device. FIG. 1 is a diagram of data transmission at layers of protocol stacks. Data first arrives at a PDCP layer of the network device. After being processed at the PDCP layer, the data is transmitted to an RLC layer and a MAC layer. After being processed at the MAC layer, the data is sent to the terminal device via a physical layer. When the terminal device receives the data, the data successively passes through the following protocol layers: a physical layer, a MAC layer, an RLC layer, and a PDCP layer. Data on each radio bearer needs to be processed at each layer. Each layer has a corresponding functional entity to perform a corresponding function. For example, the PDCP layer corresponds to a PDCP entity, the RLC layer corresponds to an RLC entity, and the MAC layer corresponds to a MAC entity. Each radio bearer includes one PDCP entity and one or more RLC entities, and each RLC entity corresponds to one logical channel. One MAC entity corresponds to a plurality of logical channels. Data on the logical channels may be multiplexed at the MAC layer, for example, multiplexed into a same data block at the MAC layer, and finally sent via the physical layer. An uplink data transmission process is similar.

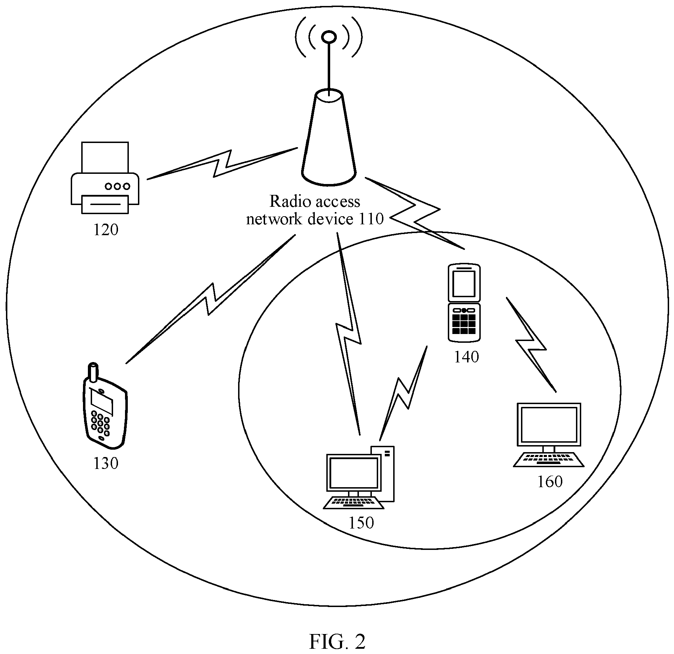

FIG. 2 is a diagram of a communication system to which an embodiment of this application is applicable. As shown in FIG. 2, the mobile communication system 100 may include at least one radio access network device 110 and at least one terminal device (terminal devices 120, 130, 140, 150, and 160 shown in FIG. 2). The terminal device is connected to the radio access network device in a wireless manner, and the radio access network device may be the foregoing network device. The at least one terminal device may send uplink data or information to the radio access network device, and the radio access network device 110 may send downlink data or information to the at least one terminal device. In addition, a plurality of terminal devices may form a communication system. For example, the terminal devices 140, 150, and 160 may form a communication system. The terminal device 140 may also send downlink data or information to the terminal devices 150 and 160, and the terminal devices 150 and 160 may also send uplink data or information to the terminal device 140. Uplink and downlink data and information related to a URLLC service may be transmitted between the terminal device and the radio access network device.

It should be understood that, FIG. 2 is merely a diagram, and the communication system may further include another network device and/or another terminal device that are/is not shown in FIG. 2. Quantities of radio access network devices and terminals included in the mobile communication system are not limited in embodiments of this application. In the mobile communication system 100, the radio access network device 110 may be the foregoing network device. In addition, communication between the network device and the terminal device complies with a specific protocol layer structure, for example, the protocol layer architecture shown in FIG. 1. The network device may include a CU and a DU, and the CU and the DU may be disposed separately, or may be disposed in a centralized manner. This is not limited herein in this embodiment of this application.

Currently, when a terminal device attempts to receive a multicast service, there may be problems such as a data packet loss and a failure to correctly map a data packet to a corresponding MRB, thereby affecting user experience.

In some scenarios, for a multicast service, user plane data is borne by a multicast radio bearer (multicast radio bearer, MRB). MRBs may be classified into unacknowledged mode (unacknowledged mode, UM) and acknowledged mode (acknowledged mode, AM). The classification of the MRBs may depend on a status of an RLC entity. When an MRB includes an AM RLC entity, the MRB may be an AM MRB. Currently, after a terminal device configured with an AM MRB is handed over from a source node to a target node, normal data receiving of the terminal device over the target node may be affected. For example, after the terminal device is handed over from the source node to the target node, when a receive window of a PDCP entity still includes a data packet that has not been delivered to an upper layer, and a manner of generating a PDCP serial number of a data packet of the target node is different from that of the source node, normal data receiving of the terminal device over the target node is affected. For another example, if the target node and the source node have different hyper frame numbers (Hyper Frame Number, HFN), a window parameter of the receive window of the PDCP entity of the terminal device is not applicable to the target node, and consequently, data may not be normally received. For another example, a data packet of the target node is not in the current receive window of the PDCP entity of the terminal device, or some data packets in data packets of the target node and data packets of the source node have a same SN but different content, causing a data conflict between two flows.

In some scenarios, PDCP resources of the terminal device are fixed, and the PDCP resources may also be understood as a PDCP capability. Currently, when configuring a data radio bearer (data radio bearer, DRB) used for unicast for the terminal device, an access network device does not consider a PDCP resource occupied by a multicast service. If a PDCP resource occupied by a unicast service and a PDCP resource occupied by the multicast service exceed the total PDCP resources of the terminal device, some services may be discarded and cannot be received, and service performance may be reduced. In some scenarios, when configuring a PDCP resource of a DRB for the terminal device, the network device configures a maximum value that can be used, and a sum of maximum available resources of all DRBs does not exceed a total PDCP capability of the terminal device. A PDCP resource is actually used only when a service flow arrives. In this case, if the terminal device simultaneously receives data of a multicast service and a unicast service, a resource that is configured by the access network device for the terminal device or that is reserved by the terminal device for a DRB may not be fully used. Because the terminal device may have a limited capability, when the terminal device simultaneously receives the unicast service and the multicast service, the terminal device may trigger DRB deletion or no longer receive the multicast service. In this case, PDCP resources are not fully used, but are not allocated to services that require PDCP resources. As a result, some services are disabled or some data flows are disabled.

In some scenarios, because logical channel multiplexing exists and data of an R-RNTI is retransmitted by using a C-RNTI, the terminal device may fail to map the data to a correct radio bearer (radio bearer, RB). For example, when the terminal device receives retransmission of a data packet that is scrambled by using a C-RNTI and that is scrambled by using a G-RNTI in initial transmission, the terminal device may obtain a logical channel identifier after performing descrambling by using the C-RNTI. If a plurality of multicast services are multiplexed on a logical channel, the terminal needs to determine, based on the G-RNTI corresponding to the logical channel identifier, an MRB or a multicast service to which the retransmitted data packet belongs. If the corresponding G-RNTI cannot be found based on the logical channel identifier, the terminal device cannot determine a service corresponding to the retransmitted data packet because G-RNTIs of the plurality of services correspond to the logical channel. For example, a first multicast service corresponds to a first G-RNTI, the first multicast service corresponds to a first logical channel, the first logical channel further corresponds to a second multicast service, and the second multicast service corresponds to a second G-RNTI. When a first data packet of the first multicast service fails to be transmitted and the first data packet is scrambled by using a C-RNTI and retransmitted, after the terminal device that simultaneously receives the first multicast service and the second multicast service receives the retransmitted first data packet scrambled by using the C-RNTI, because the initially transmitted data and the retransmitted data are in a same HARQ process, it may be learned through parsing that a logical channel corresponding to the first data packet is the first logical channel. However, because the G-RNTI cannot be determined, the terminal device cannot determine whether the first data packet corresponds to the first multicast service or the second multicast service. For another example, a first logical channel corresponds to a first C-RNTI and a first G-RNTI, a first multicast service corresponds to the first G-RNTI, and a first unicast service corresponds to a C-RNTI. When a first data packet of the first multicast service fails to be transmitted and the first data packet is scrambled by using a C-RNTI and retransmitted, the terminal device learns, by using the C-RNTI, that a logical channel corresponding to the first data packet is the first logical channel. However, the terminal device cannot determine whether the first data packet corresponds to the first multicast service or the first unicast service because the first G-RNTI cannot be determined.

In conclusion, this application proposes a communication method and a communication device, to ensure that a terminal device can normally receive data of a multicast service, thereby avoiding a data packet loss, improving user experience, and reducing a waste of network resources.

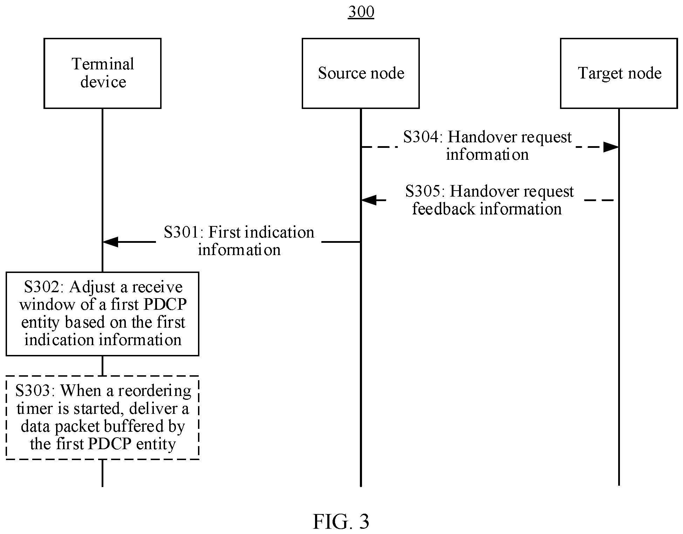

The following describes in detail the communication method provided in this application with reference to FIG. 3. FIG. 3 is a schematic flowchart of a communication method 300 according to an embodiment of this application. The method 300 may be applied to the scenario shown in FIG. 2, for example, a scenario of transmission in a multicast transmission mode.

S301: A source node sends first indication information to a terminal device, where the first indication information indicates to adjust a receive window of a first packet data convergence protocol PDCP entity when the first packet data PDCP entity is re-established.

Correspondingly, the terminal device receives the first indication information.

Specifically, the terminal device includes a first MRB, the first MRB includes the first PDCP entity and a first RLC entity, and the first RLC entity uses an acknowledged mode AM. The terminal device may communicate data of a first service with the source node by using the first MRB. The source node sends the first indication information to the terminal device, where the first indication information indicates the terminal device to adjust the receive window of the first PDCP entity when re-establishing the first PDCP entity.

It should be noted that the first MRB may further include a plurality of RLC entities. For example, the first MRB further includes a second RLC entity, and the second RLC entity uses an unacknowledged mode UM.

For example, the first indication information may be included in handover indication information (RRC Reconfiguration).

Before the source node sends the first indication information to the terminal device, the method 300 further includes the following steps.

S304: The source node sends handover request information to a target node, where the handover request information is used to request to switch a serving node of the terminal device.

S305: The source node receives handover request acknowledgment information, where the handover request acknowledgment information includes indication information indicating to adjust the receive window of the first PDCP entity.

For example, when the terminal device needs to perform node handover, the source node requests to switch a base station by using handover request signaling. After receiving the handover request signaling, the target node may send handover request ACK signaling. The handover request ACK includes indication information indicating to adjust the receive window of the first PDCP entity.

It should be understood that the node in embodiments of this application may be a cell or an access network device. To be specific, after a terminal device configured with an AM MRB is handed over from a source cell to a target cell, the terminal device may adjust a receive window of a first PDCP entity; or after a terminal device configured with an AM MRB is handed over from a source base station to a target base station, the terminal device may adjust a receive window of a first PDCP entity. This is not limited in embodiments of this application. For brevity, the terminal device in the following description of the method 300 may be understood as a terminal device configured with an AM MRB, unless otherwise specified.

It should be noted that the source node may transparently transmit indication information of the target node. The indication information is the first indication information. The source node only forwards the indication information, or the source node may generate the first indication information based on an ACK feedback of the target node, where the first indication information is included in first information (for example, RRC reconfiguration signaling) indicating the terminal device to perform node handover. This is not limited in this embodiment of this application.

In this application, the source node may indicate the terminal device to adjust the receive window of the PDCP entity when re-establishing the PDCP entity, or the target node may indicate the terminal device to adjust the receive window of the PDCP entity when re-establishing the PDCP entity. This is not limited in this application.

For example, the source node sends handover request signaling to the target node to request to perform node handover. After receiving the handover request signaling, the target node may send a handover request ACK. Then, the source node includes the first indication information in RRC reconfiguration signaling to be sent to the terminal device, to indicate the terminal device to adjust the receive window of the PDCP entity when re-establishing the PDCP entity.

For example, the source node sends handover request signaling to the target node to request to perform node handover. After receiving the handover request signaling, the target node may send a handover request ACK. The handover request ACK includes indication information indicating to adjust a receive window of a PDCP entity. After receiving the handover request ACK, the source node includes the indication information (which may be understood as the first indication information) in RRC reconfiguration signaling to be sent to the terminal device, to indicate the terminal device to adjust the receive window of the PDCP entity when re-establishing the PDCP entity.

For example, the source node sends handover request signaling to the target node to request to perform node handover. After receiving the handover request signaling, the target node may send a handover request ACK. The handover request ACK includes indication information indicating to adjust a receive window of a PDCP entity. After receiving the handover request ACK, the source node generates first indication information based on the handover request ACK, and then includes the first indication information in RRC reconfiguration signaling to be sent to the terminal device, to indicate the terminal device to adjust the receive window of the PDCP entity when re-establishing the PDCP entity.

Optionally, in some embodiments, the first indication information may directly indicate the terminal device to adjust the receive window of the first PDCP entity when re-establishing the first PDCP entity.

For example, the first indication information may include one or more bits. For example, 00 indicates that the receive window of the PDCP entity is not adjusted when the PDCP entity is re-established, and 01 indicates that the receive window of the PDCP entity is adjusted when the PDCP entity is re-established.

That the terminal device adjusts the receive window of the first PDCP entity includes:
the terminal device initializes a window parameter of the receive window of the first PDCP entity, where the window parameter of the receive window of the first PDCP entity includes at least one of TX_NEXT, RX_NEXT, or RX_DELIV; or
the terminal device adjusts a window parameter of the receive window of the first PDCP entity based on HFNs of the target node and the source node.

Optionally, in some embodiments, the first indication information may alternatively indirectly indicate the terminal device to adjust the receive window of the first PDCP entity when re-establishing the first PDCP entity.

In some embodiments, the first indication information includes second indication information, and the second indication information indicates that an area session ID of the target node is inconsistent with an area session ID of the source node.

Specifically, one multicast service may be associated with a plurality of multicast service areas, and each multicast service area includes one area session ID. When the second indication information indicates that the area session IDs of the source node and the target node are inconsistent, when receiving the second indication information, the terminal device may learn, based on content included in the second indication information, that the receive window of the PDCP entity needs to be adjusted when the PDCP entity is re-established.

It should be noted that, in some cases, that the first indication information includes the second indication information may be understood as that the first indication information is equivalent to the second indication information, and that the second indication information indicates that the area session ID of the target node is inconsistent with the area session ID of the source node may be understood as that the first indication information specifically indicates that the area session ID of the target node is inconsistent with the area session ID of the source node.

In some other cases, that the first indication information includes the second indication information may be understood as that the second indication information is included in the first indication information.

The second indication information may directly indicate that the area session IDs of the source node and the target node are inconsistent. For example, the second indication information may include one or more bits. For example, 00 indicates that the area session IDs of the source node and the target node are inconsistent, and 01 indicates that the area session IDs of the source node and the target node are consistent.

In a possible implementation, the source node further reports the area session ID of the source node when sending the handover request information to the target node, and after receiving the handover request information, the target node may determine that the area session ID of the source node is different from the area session ID of the target node, and the target node may further send the second indication information when sending the handover request acknowledgment information to the source node.

In another possible implementation, the source node sends the handover request information to the target node. After receiving the handover request information, the target node further sends the area session ID of the target node when sending the handover request acknowledgment information to the source node. After receiving the handover request acknowledgment information, the source node may determine that the area session ID of the target node is different from the area session ID of the source node, and the source node may generate the second indication information and send the second indication information to the terminal device.

The second indication information may alternatively indirectly indicate that the area session IDs of the source node and the target node are inconsistent. For example, the second indication information includes the area session ID of the source node and/or the area session ID of the target node. After receiving the second indication information, the terminal device may finally determine, based on content of the second indication information, whether the area session IDs of the source node and the target node are consistent.

In a possible implementation, the source node sends the handover information to the target node; after receiving the handover request information, the target node further sends the area session ID of the target node when sending the handover request acknowledgment information to the source node; and after receiving the handover request acknowledgment information, the source node sends the second indication information to the terminal device, where the second indication information includes the area session ID of the source node and the area session ID of the target node.

In some other embodiments, the first indication information includes third indication information, and the third indication information indicates that PDCP serial numbers (serial number, SN) of the target node and the source node are not synchronized.

Specifically, to ensure that a multicast service can run normally when the terminal device performs node handover, PDCP SNs of the target node and the source node need to be synchronized. When the third indication information indicates that the PDCP SNs of the target node and the source node are not synchronized, the terminal device needs to adjust a receive window of a PDCP entity when re-establishing the PDCP entity. That the PDCP SNs are synchronized may be understood as that the source node and the target node have a same PDCP SN for a same data packet from a core network.

For descriptions of a relationship between the first indication information and the third indication information, refer to the descriptions of the first indication information and the second indication information. For brevity, details are not described herein again.

The third indication information may directly indicate that the PDCP SNs of the source node and the target node are not synchronized. For example, the third indication information may include one or more bits. For example, 00 indicates that the PDCP SNs of the source node and the target node are not synchronized, and 01 indicates that the PDCP SNs of the source node and the target node are synchronized.

In a possible implementation, when sending the handover request information to the target node, the source node further reports whether the PDCP SN of the source node is synchronized. After receiving the handover request information, the target node may determine whether the PDCP SN of the source node is synchronized, and the target node may further send the third indication information when sending the handover request acknowledgment information to the source node.

In another possible implementation, the source node sends the handover information to the target node. After receiving the handover request information, the target node further sends, when sending the handover request acknowledgment information to the source node, information indicating whether the PDCP SN of the target node is synchronized. After receiving the handover request acknowledgment information, the source node may determine whether the PDCP SN of the target node is synchronized. In this case, the source node may generate the third indication information and send the third indication information to the terminal device.

The third indication information may further indirectly indicate that the PDCP SNs of the source node and the target node are not synchronized. For example, the third indication information may indicate manners in which the source node and the target node perform PDCP SN synchronization. When the manners in which the source node and the target node perform PDCP SN synchronization are different, it can be learned that the PDCP SNs of the source node and the target node are not synchronized. A manner of performing PDCP SN synchronization is not limited in this application. For example, the manner of performing PDCP SN synchronization may include: a first synchronization manner of multiplexing an SN of a packet header of a GPRS tunneling protocol for the user plane (GPRS Tunneling Protocol for the user plane, GTP-U); a second synchronization manner of adding a new extension header for PDCP SN synchronization; a third synchronization manner of multiplexing a quality of service flow identity (quality of service flow identity, QFI) SN of a GTP-U Container extension header; and a fourth synchronization manner of implementing PDCP SN synchronization based on a common next generation nodeB central unit user plane (next generation nodeB central unit user plane, gNB-CU-UP).

It should be understood that the foregoing synchronization manners are merely examples. In this embodiment of this application, the source node and the target node may alternatively use another synchronization manner to implement the method in this embodiment of this application, and the another synchronization manner shall also fall within the protection scope of this application.

In a possible implementation, when sending the handover request information to the target node, the source node further reports a synchronization manner of PDCP SN synchronization of the source node. After receiving the handover request information, the target node may determine whether the synchronization manner of the source node is the same as a synchronization manner of the target node. When the synchronization manners are different, the target node may further send the third indication information when sending the handover request acknowledgment information to the source node.

In another possible implementation, the source node sends the handover information to the target node. After receiving the handover request information, the target node further sends a synchronization manner of PDCP SN synchronization of the target node when sending the handover request acknowledgment information to the source node. After receiving the handover request acknowledgment information, the source node may determine whether the synchronization manner of the target node is the same as a synchronization manner of the source node. When the synchronization manners are different, the source node may generate the third indication information and send the third indication information to the terminal device.

Optionally, in some other embodiments, the first indication information includes fourth indication information, and the fourth indication information indicates the HFN of the target node.

Specifically, a window parameter of a receive window of a PDCP entity is a count (count) based on PDU DATA. The count includes an HFN and a PDCP SN, and the HFN is maintained by a receive end and a transmit end. If the fourth indication information indicates the HFN of the target node, when receiving the fourth indication information, the terminal device may learn, with reference to the HFN currently maintained by the terminal device and the source node and based on content included in the fourth indication information, whether the receive window of the PDCP entity needs to be adjusted when the PDCP entity is re-established. If the HFNs are consistent, no adjustment is required. If the HFNs are inconsistent, adjustment is required.

In a possible implementation, the source node sends the handover request information to the target node. After receiving the handover request information, the target node may further send the HFN (that is, the fourth indication information) of the target node when sending the handover request acknowledgment information to the source node. After receiving the handover request acknowledgment information, the source node sends the HFN of the target node to the terminal device, so that the terminal device can determine whether the HFNs of the source node and the target node are consistent when learning the HFNs of the source node and the target node.

S302: The terminal device adjusts the receive window of the first PDCP entity based on the first indication information.

Optionally, in some embodiments, the first indication information may directly indicate the terminal device to adjust the receive window of the first PDCP entity when re-establishing the first PDCP entity.

Specifically, after receiving the first indication information, the terminal device may adjust the receive window of the first PDCP entity when re-establishing the first PDCP entity. For example, the terminal device initializes the window parameter of the receive window of the first PDCP entity.

For example, after receiving the first indication information, the terminal device may initialize values of RX_NEXT and RX_DELIV.

Optionally, in some embodiments, the first indication information includes the second indication information, and the second indication information indicates that the area session ID of the target node is inconsistent with the area session ID of the source node.

After receiving the second indication information, the terminal device may determine that the area session IDs of the target node and the source node are inconsistent, and the terminal device may adjust the receive window of the first PDCP entity when re-establishing the first PDCP entity. For example, the terminal device initializes the window parameter of the receive window of the first PDCP entity.

Optionally, in some embodiments, the first indication information includes the third indication information, and the third indication information indicates that the PDCP SNs of the target node and the source node are not synchronized.

After receiving the third indication information, the terminal device may determine that the PDCP SNs of the target node and the source node are not synchronized, and the terminal device may adjust the receive window of the first PDCP entity when re-establishing the first PDCP entity. For example, the terminal device initializes the window parameter of the receive window of the first PDCP entity.

In this embodiment of this application, when the terminal device configured with the AM MRB performs node handover, a receive window of a PDCP entity corresponding to the AM MRB may be initialized. This avoids a conflict that is between a data packet of the target node and a data packet buffered on the source node and that is caused because the window is not initialized on the target node, thereby avoiding problems such as data packet discarding of the terminal device and data packet disorder.

Optionally, in some embodiments, the first indication information includes the fourth indication information, and the fourth indication information indicates the HFN of the target node.

After receiving the fourth indication information, when determining that the HFNs of the target node and the source node are inconsistent, the terminal device may adjust the window parameter of the receive window of the first PDCP entity based on a difference between the HFN of the target node and the HFN of the source node. For example, the HFN maintained by the source node and the terminal device is 5, and the HFN maintained by the target node is 10. In this case, 5*2^{[PDCP SN Size]} is added to all window parameters of the receive window of the first PDCP entity.

Further, when a value range of the adjusted window parameter is outside [0, 2³²⁻¹], the terminal device may release or reconfigure the AM MRB.

Optionally, in some embodiments, the method 300 further includes the following step.

S303: When a reordering timer is started, deliver a data packet buffered by the first PDCP entity.

Specifically, when the reordering timer of the terminal device is started, and the receive window of the first PDCP entity needs to be adjusted, buffered data packets may be delivered in ascending order of counts.

In this embodiment of this application, when the terminal device configured with the AM MRB performs node handover, the receive window of the PDCP entity corresponding to the AM MRB may be adjusted. This avoids impact that is of a data packet of the source node on receiving of a data packet of the target node by the terminal device and that is caused because data of the source node is inconsistent with data of the target node after the terminal device is handed over to the target node, and this avoids a loss of a data packet that is received from the source node and buffered by the terminal device, thereby improving user experience.

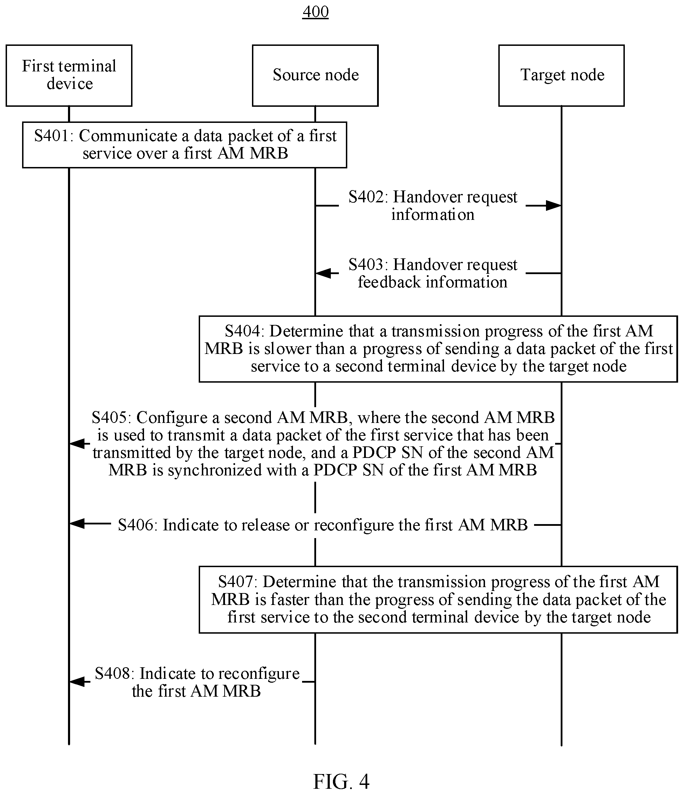

FIG. 4 is a schematic flowchart of another example communication method 400 according to an embodiment of this application. The method 400 may be applied to the scenario shown in FIG. 2. A target node in the method 400 supports PDCP SN synchronization, but the target node does not use a PDCP SN manner to send data.

S401: A first terminal device communicates a data packet of a first service with a source node over a first AM MRB.

S402: The source node sends handover request information to the target node.

Correspondingly, the target node receives the handover request information sent by the source node.

S403: The target node sends handover request acknowledgment information to the source node.

Correspondingly, the source node receives the handover request acknowledgment information sent by the target node.

S404: The target node determines that a transmission progress of the first AM MRB is slower than a progress of sending a data packet of the first service to a second terminal device by the target node.

Specifically, the target node may also send the data packet of the first service to a terminal device (for example, the second terminal device) other than the first terminal device, and a transmission progress of the target node may be faster than a transmission progress of the source node. The transmission progress of the source node for the first service is equivalent to the transmission progress of the first AM MRB. When the target node determines that the transmission progress of the first AM MRB is slower than the progress of sending the data packet of the first service to the second terminal device by the target node, S405 may be performed.

It should be noted that the target node does not perform PDCP SN synchronization when sending the data packet of the first service to the second terminal device. In other words, when sending a same data packet of the first service, the source node and the target node do not use a same PDCP SN.

The target node may determine the transmission progress of the first AM MRB in the following manners:
Manner 1: The source node may indicate the transmission progress of the first AM MRB by using SN Status Transfer signaling.
Manner 2: The source node may report the transmission progress of the first AM MRB in the handover request information.
Manner 3: The target node may determine the transmission progress of the first AM MRB by using a core network element.
Manner 4: The target node may determine the transmission progress of the source node when a terminal device other than the first terminal device performs node handover.

It should be understood that a manner in which the target node determines the transmission progress of the first AM MRB is not limited in this embodiment of this application. A method for determining the transmission progress of the first AM MRB in a manner other than the foregoing four manners to implement this application should fall within the protection scope of this application.

S405: The target node configures a second AM MRB for the first terminal device, where the second AM MRB is used to transmit the data packet of the first service that has been transmitted by the target node, and a PDCP SN of the second AM MRB is synchronized with a PDCP SN of the first AM MRB.

Specifically, when determining that the transmission progress of the first AM MRB is slower than the progress of sending the data packet of the first service to the second terminal device by the target node, the target node may configure the second AM MRB for the first terminal device, to transmit the data packet of the first service that has been transmitted by the target node.

In a possible implementation, the second AM MRB is used to transmit all data packets of the first service that have been transmitted by the target node. For example, the first terminal device has received the first 500 data packets of the first service over the first AM MRB, and at this moment, the target node has sent the first 600 data packets of the first service to the second terminal device. In this case, a progress of transmitting the first service by the target node is faster than a transmission progress of the first AM MRB, and the target node may configure a new AM MRB for the first terminal device, where the AM MRB is used to transmit the first 600 data packets of the first service.

In a possible implementation, the second AM MRB is used to transmit all data packets of the first service that have been transmitted by the source node. For example, the first terminal device has received the first 500 data packets of the first service over the first AM MRB, and at this moment, the target node has sent the first 600 data packets of the first service to the second terminal device. In this case, a progress of transmitting the first service by the target node is faster than a transmission progress of the first AM MRB, and the target node may configure a new AM MRB for the first terminal device, where the AM MRB is used to transmit the first 500 data packets of the first service.

In a possible implementation, the second AM MRB is used to transmit a data packet of the first service that has been transmitted by the target node but has not been transmitted by the source node. For example, the first terminal device has received the first 500 data packets of the first service over the first AM MRB, and at this moment, the target node has sent the first 600 data packets of the first service to the second terminal device. In this case, a progress of transmitting the first service by the target node is faster than a transmission progress of the first AM MRB, and the target node may configure a new AM MRB for the first terminal device, where the AM MRB is used to transmit the 501^{st} to the 600^{th} data packets of the first service.

Further, in a possible implementation, the second AM MRB is further used to continue transmitting a data packet of the first service.

For example, the first terminal device has received the first 500 data packets of the first service over the first AM MRB, and at this moment, the target node has sent the first 600 data packets of the first service to the second terminal device. In this case, a progress of transmitting the first service by the target node is faster than a transmission progress of the first AM MRB, and the target node may configure a new AM MRB for the first terminal device, where the AM MRB is used to transmit the 501^{st} to the 600^{th} data packets and data packets after the 600^{th} data packets of the first service.

That the PDCP SN of the second AM MRB is synchronized with the PDCP SN of the first AM MRB may be understood as that PDCP SNs of a same data packet borne by the first AM MRB and the second AM MRB are consistent.

Further, when the transmission progress of the second AM MRB is the same as the transmission progress of the first AM MRB, the method 400 further includes the following step.

S406: The target node indicates the first terminal device to release or reconfigure the first AM MRB.

Alternatively, when the transmission progress of the second AM MRB is the same as the transmission progress of the first AM MRB and duration reaches a first threshold, S406 is performed.

Alternatively, when the transmission progress of the second AM MRB exceeds the transmission progress of the first AM MRB by a second threshold, S406 is performed. For example, the second threshold is 50, and the transmission progress of the first AM MRB is 500 data packets. When the transmission progress of the second AM MRB reaches 550, S406 is performed.

Alternatively, when a difference in a quantity of data packets between the transmission progress of the second AM MRB and the transmission progress of the first AM MRB is less than a third threshold, S406 is performed.

Alternatively, when a quantity of data packets buffered in the target node exceeds a third threshold or the target node is unable to buffer a new data packet, S406 is performed.

For example, when the transmission progress of the second AM MRB is the same as the transmission progress of the first AM MRB, the target node may indicate the first terminal device to release or reconfigure the first AM MRB. For example, if the transmission progress of the first AM MRB is the first 500 data packets of the first service, when the second AM MRB transmits the 500^{th} data packet, the target node may indicate the first terminal device to release or reconfigure the first AM MRB.

Further, the method 400 further includes:
the target node buffers a data packet of the first service that has been sent by the target node but has not been sent by the source node.

Optionally, the method 400 further includes the following step.

S407: The source node determines that the transmission progress of the first AM MRB is faster than the progress of sending the data packet of the first service to the second terminal device by the target node.

The source node may determine the transmission progress of the target node in the following manners:
Manner 1: The target node reports the transmission progress of the target node by using the handover request acknowledgment information.
Manner 2: The source node determines the transmission progress of the target node by using the core network element.

It should be understood that a manner in which the source node determines the transmission progress of the target node is not limited in this embodiment of this application. A method for determining the transmission progress of the target node in a manner other than the foregoing two manners to implement this application should fall within the protection scope of this application.

S408: The source node indicates the first terminal device to reconfigure the first AM MRB.

Specifically, when the source node determines that the transmission progress of the target node is slower than the transmission progress of the first AM MRB, the source node may indicate the first terminal device to reconfigure the first AM MRB. After completing reconfiguration of the first AM MRB, the first terminal device may perform a node handover operation. For example, the first terminal device has received the first 500 data packets of the first service over the first AM MRB, and at this moment, the target node has sent the first 400 data packets of the first service to the second terminal device. In this case, a progress of transmitting the first service by the target node is slower than the transmission progress of the first AM MRB, and the source node may indicate the first terminal device to reconfigure the first AM MRB.

Alternatively, S407 and S408 may be determined and indicated by the target node. For example, when the target node determines that the transmission progress of the first AM MRB is faster than the progress of sending the data packet of the first service to the second terminal by the target node, the target node may indicate the first terminal device to reconfigure the first AM MRB. In this embodiment of this application, when the terminal device configured with the first AM MRB performs node handover, the source node and the target node may select different transmission solutions based on the transmission progress of the first AM MRB and the transmission progress of the target node, to avoid a data packet loss caused by node handover and improve user experience.

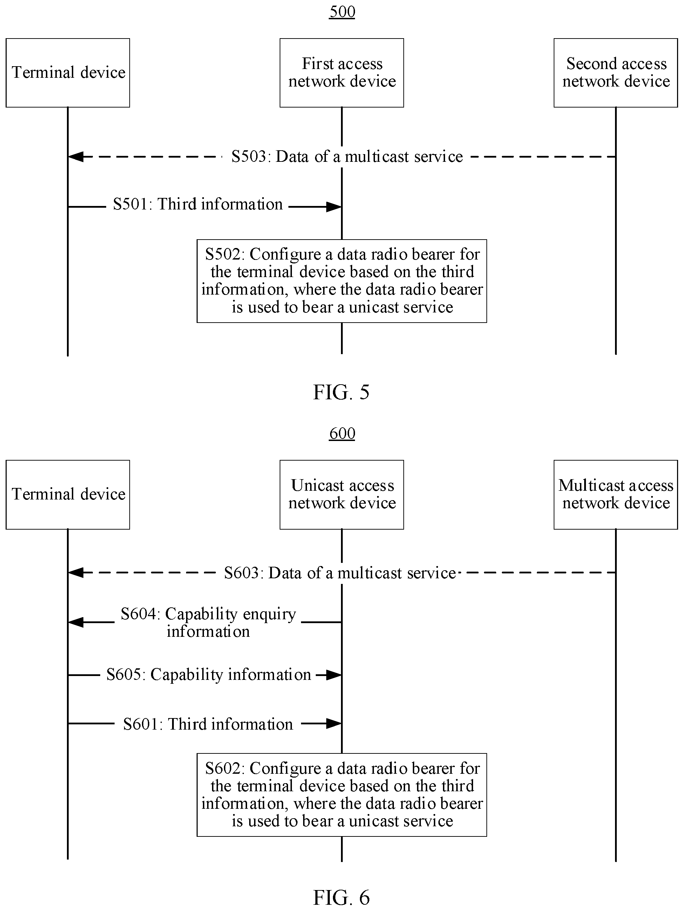

The following describes in detail the communication method provided in this application with reference to FIG. 5. FIG. 5 is a schematic flowchart of a communication method 500 according to an embodiment of this application. The method 500 may be applied to the scenario shown in FIG. 2, for example, a scenario in which a terminal device simultaneously receives a unicast service and a multicast service.

S501: A first access network device receives third information sent by the terminal device, where the third information indicates a resource used by the terminal device to receive the multicast service or a capability of supporting receiving a multicast service.

Correspondingly, the terminal device sends the third information to the first access network device.

It should be noted that the capability of supporting receiving a multicast service may be understood as a capability of the terminal device to receive only a multicast service and a capability of the terminal device to support receiving a multicast service when the terminal device simultaneously receives a unicast service and a multicast service.

Specifically, the first access network device may receive the third information sent by the terminal device, so that the first access network device may configure, for the terminal device based on the third information, a data radio bearer used for the unicast service.

The third information includes a quantity of robust header compression contexts (ROHC-Context) and/or a quantity of Ethernet header compression contexts (Ethernet-Context) and/or a quantity of MRBs or logical channels (logical channel, LCH) used for receiving the multicast service.

It should be noted that the resource used by the terminal device to receive the multicast service may be understood as a resource used when the terminal device is receiving the multicast service;
the resource used by the terminal device to receive the multicast service may be understood as a resource that the terminal device expects to occupy when the terminal device receives the multicast service; or
the resource used by the terminal device to receive the multicast service may be understood as a resource planned for supporting receiving the multicast service by the terminal device.

The terminal device may send the third information in the following manners.
Manner 1: The third information may be included in MBS interest indicator signaling.
Manner 2: The terminal device may separately send the third information.
Manner 3: The third information may be included in UE assistance information signaling.
Manner 4: The third information may be included in UECapabilityInformation signaling.

It should be understood that, in this embodiment of this application, a manner in which the terminal device sends the resource used for receiving the multicast service or the capability of supporting receiving a multicast service is not limited. A method for implementing this application in a manner other than the foregoing four manners should fall within the protection scope of this application.

S502: The first access network device configures a data radio bearer (data radio bearer, DRB) for the terminal device based on the third information, where the DRB is used to bear a unicast service.

Specifically, after receiving the third information, the first access network device may determine, based on the third information, the resource used by the terminal device for the multicast service or the capability of supporting receiving the multicast service, so that the first access network device can configure, for the terminal device based on the resource used by the terminal device for the multicast service or the capability of receiving the multicast service and with reference to a capability of the terminal device, the DRB used to bear a unicast service.

Specifically, the network device may configure, for the terminal device, a maximum quantity of ROHC-Contexts and/or EHC-Contexts and/or LCHs that are/is available for each DRB.

For example, the third information indicates that 15 LCHs are currently used by the terminal device to receive the multicast service. Because a total quantity of LCHs is 32, the first access network device may determine that a quantity of LCHs of the DRB used for the unicast service is 17.

For another example, the third information indicates that a maximum quantity of ROHC-Contexts used when the terminal device supports receiving the multicast service is 50, and a maximum quantity of supported ROHC-Contexts that is reported by the terminal device is 100. In this case, the first access network device may determine that a quantity of ROHC-Contexts of the DRB for the unicast service is 50.

Optionally, in some embodiments, before the terminal device sends the third information, the method 500 further includes the following step.

S503: A second access network device sends data of the multicast service to the terminal device.

Specifically, the terminal device receives the data of the multicast service that is sent by the second access network device to the terminal device, to determine a resource that is currently used to receive the multicast service.

It should be understood that, in the foregoing steps S501 to S503, (1) the first access network device may be a unicast access network device; and (2) the second access network device may be a multicast access network device or a broadcast access network device. For ease of understanding of the communication method provided in this application, by way of example and not limitation, the following separately describes S501 to S503 in the method 500 in detail with reference to a specific example method shown in FIG. 6 by using an example in which the first access network device is a unicast access network device, the second access network device is a multicast access network device, and the third information is sent in Manner 1 or Manner 2.

It should be noted that some steps mentioned below are the same as those in the foregoing method 500, and related details are not described herein again. For a specific process, refer to related steps in the method 500.

S601: A unicast access network device receives third information sent by a terminal device, where the third information indicates a resource used by the terminal device to receive a multicast service.

Correspondingly, the terminal device sends the third information to the unicast access network device.

Specifically, the unicast access network device may receive the third information sent by the terminal device, so that the unicast access network device can configure, for the terminal device based on the third information, a DRB used for a unicast service.

The third information includes a quantity of ROHC-Contexts and/or a quantity of Ethernet header compression contexts (Ethernet-Context) and/or a quantity of MRBs or LCHs (logical channel, LCH) used for receiving the multicast service.

The resource used by the terminal device to receive the multicast service may be understood as a resource used when the terminal device is receiving the multicast service;
the resource used by the terminal device to receive the multicast service may be understood as a resource that the terminal device expects to occupy when the terminal device receives the multicast service; or
the resource used by the terminal device to receive the multicast service may be understood as a resource planned for supporting receiving the multicast service by the terminal device.

It may be understood that the quantity of ROHC-Contexts used for receiving the multicast service included in the third information may be understood as a quantity of ROHC-Contexts used when the terminal device is receiving the multicast service;
the resource used by the terminal device to receive the multicast service may be understood as a quantity of ROHC-Contexts that the terminal device expects to occupy when the terminal device receives the multicast service; or
the resource used by the terminal device to receive the multicast service may be understood as a quantity of ROHC-Contexts planned for supporting receiving the multicast service by the terminal device.

For a description that the third information includes the quantity of Ethernet-Contexts and/or the quantity of MRBs or LCHs used for receiving the multicast service, refer to the foregoing description. For brevity, details are not described herein again.

S602: The unicast access network device configures a DRB for the terminal device based on the third information, where the DRB is used to bear a unicast service.

Specifically, the unicast access network device may determine, based on the third information, the resource used by the terminal device for the multicast service, so that the unicast access network device can determine, based on a capability of the terminal device, a resource used for the unicast service. The capability of the terminal device may be understood as a capability of the terminal device to receive a multicast service and a unicast service. For example, a quantity of ROHC-Contexts that may be used by the terminal device to receive the unicast service and the multicast service is 100.

S603: A multicast access network device sends data of the multicast service to the terminal device.

For a description of S603, refer to the description of S503. For brevity, details are not described herein again.

The unicast access network device may determine the capability of the terminal device in the following manners.

Manner 1: The terminal device reports the capability of the terminal device to the unicast access network device.

Manner 2: The unicast access network device determines the capability of the terminal device by using a core network element or another access network device.

For Manner 1, before the terminal device sends the third information, the method 600 further includes the following steps.

S604: The unicast access network device sends capability enquiry information to the terminal device.

Correspondingly, the terminal device receives the capability enquiry information sent by the unicast access network device.

S605: The terminal device sends capability information to the unicast access network device.

Correspondingly, the unicast access network device receives the capability information sent by the terminal device.

Specifically, the capability information includes the capability of the terminal device to receive a multicast service and a unicast service.

For example, the unicast access network device requests, by using UECapalibityEnquiry signaling, the capability of the terminal device to receive a unicast service and a multicast service, and the terminal device reports, to the unicast access network device by using UECapability Information signaling, the capability of the terminal device to support a unicast service and a multicast service.

In this embodiment of this application, the terminal device reports, to the unicast access network device, information about the resource used for the multicast service, so that the first access network device can configure, for the terminal device based on the resource for the multicast service and with reference to the capability of the terminal device, the DRB used for the unicast service, thereby ensuring that a PDCP capability of the terminal device is not exceeded.

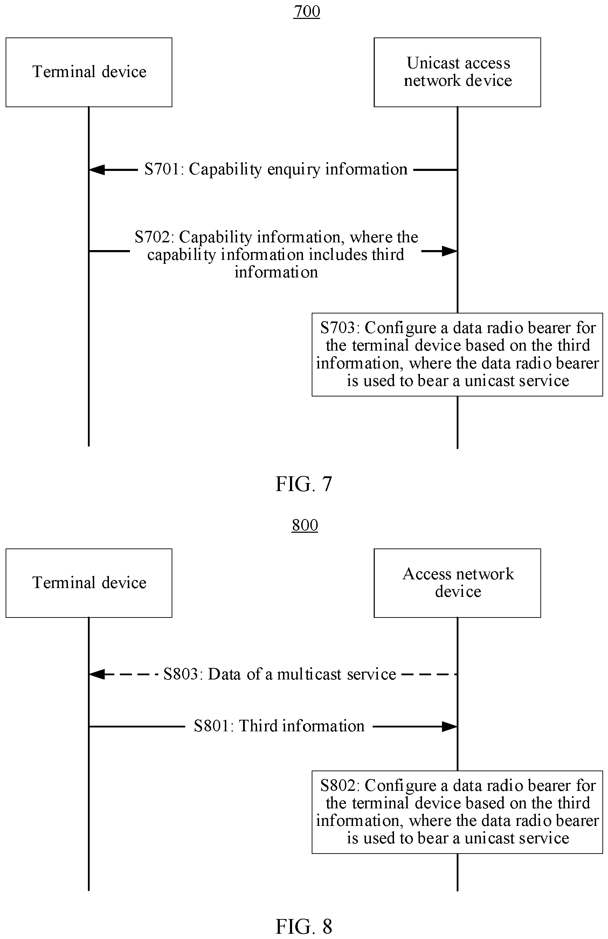

The foregoing method 600 is described by using an example in which the third information is sent in Manner 1 and Manner 2. The following describes in detail S501 and S502 in the method 500 by using an example in which the third information sent in Manner 4 with reference to FIG. 7.

It should be noted that some steps mentioned below are the same as those in the foregoing methods 500 and 600, and related details are not described herein again. For a specific process, refer to related steps in the methods 500 and 600.

S701: A unicast access network device sends capability enquiry information to a terminal device.

Correspondingly, the terminal device receives the capability enquiry information sent by the unicast access network device.

Specifically, the capability enquiry information is used to request a capability of the terminal device to support a multicast service.

S702: The terminal device sends capability information to the unicast access network device, where the capability information includes the third information.

Correspondingly, the unicast access network device receives the capability information sent by the terminal device.

S703: The unicast access network device configures a DRB for the terminal device based on the third information, where the DRB is used to bear a unicast service.

In a possible implementation, the capability enquiry information sent by the unicast access network device is further used to request a capability of the terminal device to support a unicast service. Correspondingly, the capability information sent by the terminal device indicates the capability of the terminal device to support unicast, so that the unicast access network device can configure, for the terminal device based on the capability of the terminal device to support a multicast service, the DRB to bear the unicast service. For example, if the terminal device reports that a quantity of ROHC-Contexts used to support the multicast service is 25, and reports that a quantity of ROHC-Contexts used to support the unicast service is 75, a quantity of ROHC-Contexts used when the unicast access network device configures the unicast service for the terminal device cannot exceed 75.

In this possible implementation, the terminal device may separately report, in the capability information, the capability of supporting the multicast service and the capability of supporting the unicast service. It may be understood that a sum of the capability of supporting the multicast service and the capability of supporting the unicast service of the terminal device is a total capability of receiving services by the terminal device. For example, if the terminal device supports 25 ROHC-Contexts used for the multicast service and supports 75 ROHC-Contexts used for the unicast service, a quantity of ROHC-Contexts used for the terminal device to receive the unicast service and the multicast service is 100.

In another possible implementation, the capability enquiry information sent by the unicast access network device is further used to request a total capability of the terminal device to support the unicast service and the multicast service. Correspondingly, the capability information sent by the terminal device indicates the total capability of the terminal device to support the unicast service and the multicast service, so that the unicast access network device can configure, for the terminal device based on a difference between the total capability of the terminal device and the capability of the terminal device to support the multicast service, the DRB used to bear the unicast service. For example, if the terminal device reports that a maximum quantity of ROHC-Contexts supported by the terminal device is 100, and the terminal device reports that a quantity of ROHC-Contexts used to support the multicast service is 25, a quantity of ROHC-Contexts used when the unicast access network device configures the unicast service for the terminal device cannot exceed 75.

It should be noted that, in this embodiment of this application, Manner 1 to Manner 4 are not limited to separate implementations, and any combination of Manner 1 to Manner 4 may be used. For example, the terminal device may send the third information in Manner 1 and Manner 2.

In this embodiment of this application, the terminal device reports the capability of supporting the multicast service to the unicast access network device, so that the first access network device can configure, for the terminal device based on the capability of the terminal device to support the multicast service, the DRB used for the unicast service, thereby ensuring that a PDCP capability of the terminal device is not exceeded.

It should be noted that in the foregoing methods 500 to 700, an example in which the terminal device receives services of the unicast access network device and the multicast access network device is used. However, embodiments of this application are not limited thereto. The terminal device may alternatively receive a unicast service and a multicast service of one access network device. The following describes, with reference to FIG. 8, a schematic flowchart of another example communication method provided in this application by using an example in which a first access network sends a unicast service, a second access network sends a multicast service, and the first access network and the second access network belong to a same access network device. That the first access network and the second access network belong to a same access network device may be understood as that the first access network and the second access network are served by a same access network device.

Some steps mentioned below are the same as those in the foregoing methods 500 to 700, and related details are not described herein again. For a specific process, refer to related steps in the methods 500 to 700.

S801: An access network device receives third information sent by a terminal device, where the third information indicates a resource used by the terminal device to receive a multicast service or a capability of supporting receiving a multicast service.

For descriptions of the third information, refer to the foregoing descriptions. For brevity, details are not described herein again.

S802: The access network device configures a DRB for the terminal device based on the third information, where the DRB is used to bear a unicast service.

In this embodiment of this application, the terminal device reports, to the access network device, the capability of supporting the multicast service or the resource used to receive the multicast service, so that the access network device can configure, for the terminal device based on the capability of supporting the multicast service by the terminal device or the resource used to receive the multicast service, the DRB used for the unicast service, thereby ensuring that a PDCP capability of the terminal device is not exceeded.

Optionally, in some embodiments, before the terminal device sends the third information, the method 800 further includes the following step.

S803: The access network device sends data of the multicast service to the terminal device.

In the foregoing methods 500 to 800, an example in which the terminal device reports the resource used to receive the multicast service or the capability of supporting use of the multicast service is used. The following describes another communication method provided in this application.

S1: An access network device receives multicast service indication information sent by a terminal device, where the multicast service indication information indicates that the terminal device receives a multicast service.

Correspondingly, the terminal device sends the multicast service indication information to the access network device.

In a possible implementation, the multicast service indication information is included in MBS interest indicator signaling.

In a possible implementation, the terminal device may separately send the multicast service indication information.

S2: The access network device configures a PDCP resource threshold for the terminal device.

Specifically, when the access network device receives the multicast service indication information, the access network device may configure the PDCP resource threshold for the terminal device.

S3: When a PDCP resource used for the multicast service and/or a unicast service received by the terminal device reaches the threshold, the terminal device sends indication information, where the indication information indicates to reconfigure a PDCP resource.

Specifically, when the PDCP resource used for the unicast service and/or the multicast service received by the terminal device reaches the threshold, the terminal device may send the indication information to the access network device, to indicate to reconfigure the PDCP resource. For example, the PDCP resource of the terminal device is a quantity of ROHC-Contexts, a total quantity of ROHC-Contexts of the terminal device is 100, and the threshold is 90 or 90%. When a quantity of ROHC-Contexts used for the unicast service and/or the multicast service received by the terminal device reaches 90, the terminal device may send the indication information to the access network device.

Alternatively, in some embodiments, when the PDCP resource used for the multicast service and/or the unicast service received by the terminal device is greater than or equal to N% of the threshold, the terminal device sends the indication information, where 0≤N≤100. For example, the PDCP resource of the terminal device is a quantity of ROHC-Contexts, a total quantity of ROHC-Contexts of the terminal device is 100, the threshold is 90, and N=90. When a quantity of ROHC-Contexts used for the unicast service and/or the multicast service received by the terminal device reaches 81, the terminal device may send the indication information to the access network device.

S4: The access network device sends reconfiguration information to the terminal device, where the reconfiguration information indicates the terminal device to reconfigure the PDCP resource.

Specifically, after receiving the indication information sent by the terminal device, the access network device determines that the PDCP resource used by the terminal device reaches the threshold, and may indicate the terminal device to reconfigure the PDCP resource. For example, the PDCP resource of the terminal device is a quantity of ROHC-Contexts, a total quantity of ROHC-Contexts of the terminal device is 100, and the threshold is 70. The terminal device includes a first DRB and a second DRB. A quantity of ROHC-Contexts that can be used by the first DRB is 50, and a quantity of ROHC-Contexts that can be used by the second DRB is 50. The first DRB is used to bear a first service, and a quantity of used ROHC-Contexts is 50. The second DRB is used to bear a second service, and a quantity of used ROHC-Contexts is 20. Because a quantity of ROHC-Contexts used by the first DRB and the second DRB reaches the threshold, the terminal device sends indication information, where the indication information indicates resource usage of the first DRB and the second DRB (for example, the quantity of ROHC-Contexts used by the first DRB is 50, and the quantity of ROHC-Contexts used by the second DRB is 20). After receiving the indication information, the access network device may indicate the terminal device to reconfigure the PDCP resource, so that a resource of the ROHC-Contexts used by the second DRB changes to 20, and remaining ROHC-Contexts may be used to receive a multicast service and/or a unicast service.

In some embodiments, the access network device may be a unicast access network device.

In this embodiment of this application, the access network device sets a PDCP resource threshold. When the PDCP resource used by the terminal device exceeds the threshold, the access network device may dynamically adjust the PDCP resource, thereby avoiding a conflict between a plurality of services.

It should be noted that, in the methods 500 to 800, that the terminal device sends, to the access network device, the resource used by the terminal device to receive the multicast service or the capability of supporting receiving the multicast service is used as an example. However, this application is not limited thereto. This application further provides a communication method. The terminal device may alternatively send, to the access network device, a resource used by the terminal device to receive a unicast service or a capability of supporting receiving a unicast service, so that the access network device configures, for the terminal device, an MRB to bear a multicast service. The communication method may be applied to the scenario shown in FIG. 2, and the method includes the following steps.

S1: A first access network device receives fourth information sent by a terminal device, where the fourth information indicates a resource used by the terminal device to receive a unicast service or a capability of supporting receiving a unicast service.

Correspondingly, the terminal device sends the fourth information to the first access network device.

It should be noted that the capability of supporting receiving the unicast service may be understood as a capability of the terminal device to receive only a unicast service and a capability of the terminal device to support receiving a unicast service when the terminal device simultaneously receives a unicast service and a multicast service.

Specifically, the first access network device may receive the fourth information sent by the terminal device, so that the first access network device can configure, for the terminal device based on the fourth information, an MRB used for a multicast service.

A manner of receiving the fourth information by the first access network device is similar to a manner of receiving the third information. For brevity, details are not described herein again.

S2: The first access network device configures the MRB for the terminal device based on the fourth information, where the MRB is used to bear the multicast service.

It should be understood that, that the first access network configures the MRB for the terminal device based on the fourth information is similar to that the first access network configures the DRB for the terminal device based on the third information. For brevity, details are not described herein again.

For example, if the fourth information indicates that a maximum quantity of ROHC-Contexts that are used when the terminal device supports receiving the unicast service is 50, and a maximum quantity of supported ROHC-Contexts reported by the terminal device is 100, the first access network device may determine that a quantity of ROHC-Contexts of the MRB for the multicast service is 50.

In this embodiment of this application, the terminal device reports, to the access network device, information about the resource used for the unicast service, so that the first access network device can configure, for the terminal device based on the resource for the unicast service and with reference to the capability of the terminal device, the MRB used for the multicast service, thereby ensuring that a PDCP capability of the terminal device is not exceeded.

It may be understood that the technical solution in which the terminal device reports the resource used by the terminal device to receive the unicast service or the capability of supporting receiving the unicast service, so that the access network device configures, for the terminal device, the MRB to bear the multicast service is similar to the method 500 to the method 800. For technical details, refer to the method 500 to the method 800.

Because LCH multiplexing exists and a data packet scrambled by using a G-RNTI during initial transmission is scrambled by using a C-RNTI and retransmitted, the terminal device may fail to map data to a correct RB. For example, when the terminal device receives a data packet that is scrambled by using a G-RNTI in initial transmission and that is scrambled by using a C-RNTI and retransmitted, the terminal device may obtain an LCH identifier after performing descrambling by using the C-RNTI. If a plurality of multicast services are multiplexed on an LCH, the terminal needs to determine, based on the G-RNTI corresponding to the LCH identifier, an MRB or a multicast service to which the retransmitted data packet belongs. If the corresponding G-RNTI cannot be found based on the LCH identifier, the terminal device cannot determine a service corresponding to the retransmitted data packet because G-RNTIs of the plurality of services correspond to the LCH. For another example, when the terminal device receives a data packet that is scrambled by using a C-RNTI and retransmitted and that is scrambled by using a G-RNTI during initial transmission, the terminal device may obtain an LCH identifier after performing descrambling by using the C-RNTI. If the C-RNTI and the G-RNTI are multiplexed on the LCH, the terminal needs to determine, based on the G-RNTI corresponding to the LCH identifier, an MRB or a DRB to which the retransmitted data packet belongs. If the corresponding G-RNTI cannot be found based on the LCH identifier, the terminal device cannot determine, by using the LCH identifier, an RB corresponding to the data packet, and cannot determine a service corresponding to the data packet. For example, a first multicast service corresponds to a first G-RNTI, the first multicast service corresponds to a first LCH, the first LCH further corresponds to a second multicast service, and the second multicast service corresponds to a second G-RNTI. When a first data packet of the first multicast service fails to be transmitted, and the first data packet is scrambled by using a C-RNTI and retransmitted, after receiving the first data packet that is scrambled by using the C-RNTI and retransmitted, the terminal device may learn, through parsing, that an LCH corresponding to the first data packet is the first LCH. However, because the G-RNTI cannot be determined, the terminal device cannot determine whether the first data packet corresponds to the first multicast service or the second multicast service. For another example, a first LCH corresponds to a first C-RNTI and a first G-RNTI, a first multicast service corresponds to the first G-RNTI, and a first unicast service corresponds to a C-RNTI. When a first data packet of the first multicast service fails to be transmitted and the first data packet is scrambled by using a C-RNTI and retransmitted, the terminal device learns, by using the C-RNTI, that an LCH corresponding to the first data packet is the first LCH. However, the terminal device cannot determine whether the first data packet corresponds to the first multicast service or the first unicast service because the first G-RNTI cannot be determined.

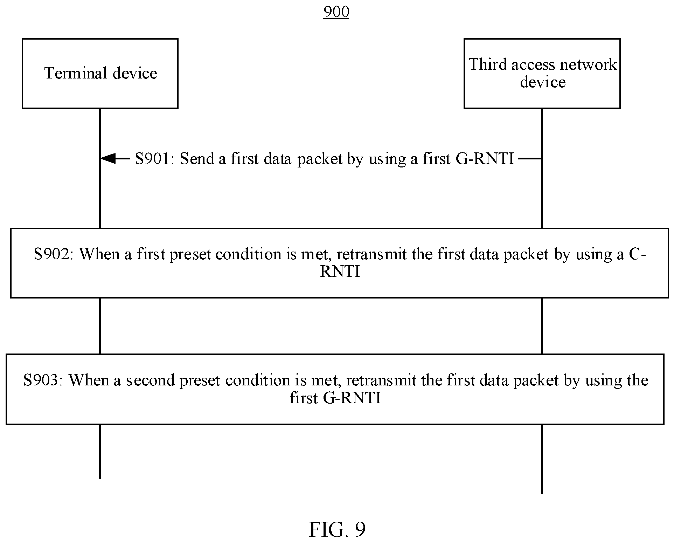

Based on this, the following describes in detail the communication method provided in this application with reference to FIG. 9. FIG. 9 is a schematic flowchart of a communication method 900 according to an embodiment of this application. The method 900 may be applied to the scenario shown in FIG. 2.

S901: A third access network device sends a first data packet to a terminal device by using a first G-RNTI, where the first data packet corresponds to a first LCH.

Correspondingly, the terminal device receives the first data packet sent by the third access network device by using the first G-RNTI.

That the third access network device sends the first data packet by using the first G-RNTI may be understood as that the third access network device scrambles the first data packet by using the first G-RNTI and then sends the first data packet.

S902: When a first preset condition is met, the third access network device retransmits the first data packet by using a C-RNTI.

Correspondingly, the terminal device receives the first data packet retransmitted by the third access network device by using the C-RNTI.

That the third access network device retransmits the first data packet by using the C-RNTI may be understood as that the third access network device scrambles the first data packet by using the C-RNTI and retransmits the first data packet.

S903: When a second preset condition is met, the third access network device retransmits the first data packet by using the first G-RNTI.

Optionally, in some embodiments, the first preset condition is that the third access network device receives a NACK feedback for the first data packet, or a plurality of RNTIs are not multiplexed on the first LCH.

It should be understood that, that a plurality of RNTIs are not multiplexed on the first LCH includes: A plurality of G-RNTIs are not multiplexed on the first LCH, or one C-RNTI and at least one G-RNTI are not multiplexed on the first LCH.

Further, in some embodiments, the first preset condition is that a plurality of G-RNTIs are not multiplexed on the first LCH.

Specifically, the first preset condition may be that the third access network device receives a NACK feedback for the first data packet. When the third access network device receives the NACK feedback for the first data packet, it indicates that the terminal device has received, in a HARQ process, the first data packet sent by using the first G-RNTI but fails to decode the first data packet. In this case, the terminal device has determined that a G-RNTI corresponding to the first data packet is the first G-RNTI or a specific service corresponding to the first data packet, and the third access network device may retransmit the first data packet by using the C-RNTI.

For example, a first multicast service corresponds to a first G-RNTI, the first multicast service corresponds to a first LCH, the first LCH further corresponds to a second multicast service, and the second multicast service corresponds to a second G-RNTI. When the terminal device receives a first data packet of the first multicast service that is sent by the third access network device by using the first G-RNTI but fails to decode the first data packet, the terminal device sends a NACK to the third access network device, and the terminal device has determined that the first data packet corresponds to the first G-RNTI. After receiving the NACK, the third access network device may retransmit the first data packet by using a C-RNTI. When receiving the first data packet retransmitted by using the C-RNTI, the terminal device decodes the retransmitted first data packet to obtain an LCH identifier, and then determines, based on the LCH identifier and the first G-RNTI, that a service corresponding to the first data packet is the first multicast service.

Specifically, the first preset condition may alternatively be that one C-RNTI and at least one G-RNTI are not multiplexed on the first LCH. When one C-RNTI and at least one G-RNTI are not multiplexed on the first LCH that bears the first multicast service, that is, the first LCH is not corresponding to one C-RNTI and at least one G-RNTI, the third access network device may retransmit the first data packet to the terminal device by using a C-RNTI. After receiving the first data packet retransmitted by using the C-RNTI, the terminal device descrambles the first data packet by using the C-RNTI, to obtain an LCH identifier of the first LCH, and then submits the first data packet to a corresponding higher layer, for example, an RLC layer or a PDCP layer.

For example, a first multicast service corresponds to a first G-RNTI, and the first multicast service corresponds to a first LCH. When the terminal device fails to receive a first data packet of the first multicast service that is sent by the third access network device by using the first G-RNTI, and a G-RNTI and a C-RNTI are not multiplexed on the first LCH, the third access network device may retransmit the first data packet to the terminal device by using a C-RNTI. When receiving the first data packet retransmitted by using the C-RNTI, the terminal device decodes the retransmitted first data packet to obtain an LCH identifier, and then determines, based on the LCH identifier, that a service corresponding to the first data packet is the first multicast service.

Specifically, the first preset condition may alternatively be that a plurality of G-RNTIs are not multiplexed on the first LCH. When a plurality of G-RNTIs are not multiplexed on the first LCH that bears the first multicast service, that is, the first LCH is not corresponding to a plurality of G-RNTIs, the third access network device may retransmit the first data packet to the terminal device by using the C-RNTI. After receiving the first data packet retransmitted by using the C-RNTI, the terminal device descrambles the first data packet by using the C-RNTI, to obtain an LCH identifier of the first LCH, and then submits the first data packet to a corresponding higher layer, for example, an RLC layer or a PDCP layer.

For example, a first multicast service corresponds to a first G-RNTI, and the first multicast service corresponds to a first LCH. When the terminal device fails to receive a first data packet of the first multicast service that is sent by the third access network device by using the first G-RNTI, and G-RNTIs are not multiplexed on the first LCH, the third access network device may retransmit the first data packet to the terminal device by using a C-RNTI. When receiving the first data packet retransmitted by using the C-RNTI, the terminal device decodes the retransmitted first data packet to obtain an LCH identifier, and then determines, based on the LCH identifier, that a service corresponding to the first data packet is the first multicast service.

In this embodiment of this application, only when the third access network device receives the NACK that is sent by the terminal device and that is for the data packet sent by the third access network device by using the G-RNTI, or the third access network device determines that the terminal device does not involve LCH multiplexing, the third access network device scrambles, by using the C-RNTI, the data packet scrambled by using the R-RNTI during initial transmission. This avoids a case in which the terminal device cannot distinguish, based on only the LCH identifier, an RB or a service to which the data packet in HARQ retransmission belongs, and effectively avoids a conflict between the two, ensuring communication quality.

Optionally, in some embodiments, the second preset condition is that the third access network device does not receive a NACK feedback for the first data packet or a timer expires, and a plurality of RNTIs are multiplexed on the first LCH.

Optionally, in some embodiments, the second preset condition is that the third access network device does not receive a NACK feedback for the first data packet or a timer expires.

Specifically, the second preset condition is that the third access network device does not receive a NACK feedback for the first data packet or a timer expires. When the third access network device does not receive the NACK feedback for the first data packet or the timer expires, it indicates that the terminal device fails to receive, in a HARQ process, the first data packet sent by using the first G-RNTI. If the third access network device retransmits the first data packet by using the C-RNTI, and if the terminal device multiplexes RNTIs on the LCH, the terminal device may not distinguish a service to which the data packet belongs. Therefore, the third access network device still retransmits the first data packet by using the first G-RNTI.

For example, a first multicast service corresponds to a first G-RNTI, the first multicast service corresponds to a first LCH, the first LCH further corresponds to a second multicast service, and the second multicast service corresponds to a second G-RNTI. When the terminal device fails to receive a first data packet of the first multicast service that is sent by the third access network device by using the first G-RNTI, the third access network device cannot retransmit the first data packet by using a C-RNTI, and still retransmits the first data packet by using the first G-RNTI.

Specifically, the second preset condition is that the third access network device does not receive a NACK feedback for the first data packet or a timer expires, and a plurality of G-RNTIs are multiplexed on the first LCH. When the third access network device does not receive a NACK feedback for the first data packet or a timer expires, and it is determined that a plurality of G-RNTIs are multiplexed on the first LCH, if the third access network device retransmits the first data packet by using a C-RNTI, the terminal device cannot distinguish a service to which the data packet belongs. Therefore, the third access network device still retransmits the first data packet by using the first G-RNTI.

For example, a first multicast service corresponds to a first G-RNTI, and the first multicast service corresponds to a first LCH. When the terminal device fails to receive a first data packet of the first multicast service that is sent by the third access network device by using the first G-RNTI, and G-RNTIs are multiplexed on the first LCH, the third access network device cannot retransmit the first data packet by using a C-RNTI, and still retransmits the first data packet by using the first G-RNTI.

Specifically, the second preset condition is that the third access network device does not receive a NACK feedback for the first data packet or a timer expires, and a C-RNTI and at least one G-RNTI are multiplexed on the first LCH. When the third access network device does not receive the NACK feedback for the first data packet or the timer expires, and it is determined that the C-RNTI and the at least one G-RNTI are multiplexed on the first LCH, if the third access network device retransmits the first data packet by using the C-RNTI, the terminal device cannot distinguish an RB to which the data packet belongs. Therefore, the third access network device still retransmits the first data packet by using the first G-RNTI.

For example, a first multicast service corresponds to a first G-RNTI, and the first multicast service corresponds to a first LCH. When the terminal device fails to receive a first data packet of the first multicast service that is sent by the third access network device by using the first G-RNTI, and a G-RNTI and a C-RNTI are multiplexed on the first LCH, the third access network cannot retransmit the first data packet by using a C-RNTI, and still retransmits the first data packet by using the first G-RNTI.

In this embodiment of this application, when the terminal device fails to receive initially transmitted data sent by using a G-RNTI, or when the terminal device fails to receive initially transmitted data sent by using a G-RNTI and LCH multiplexing exists, the third access network device does not perform retransmission by using a C-RNTI. This avoids a case in which the terminal device cannot distinguish, based on only an LCH identifier, an RB or a service to which the data packet in HARQ retransmission belongs, thereby effectively avoiding a conflict between the two, and ensuring communication quality.

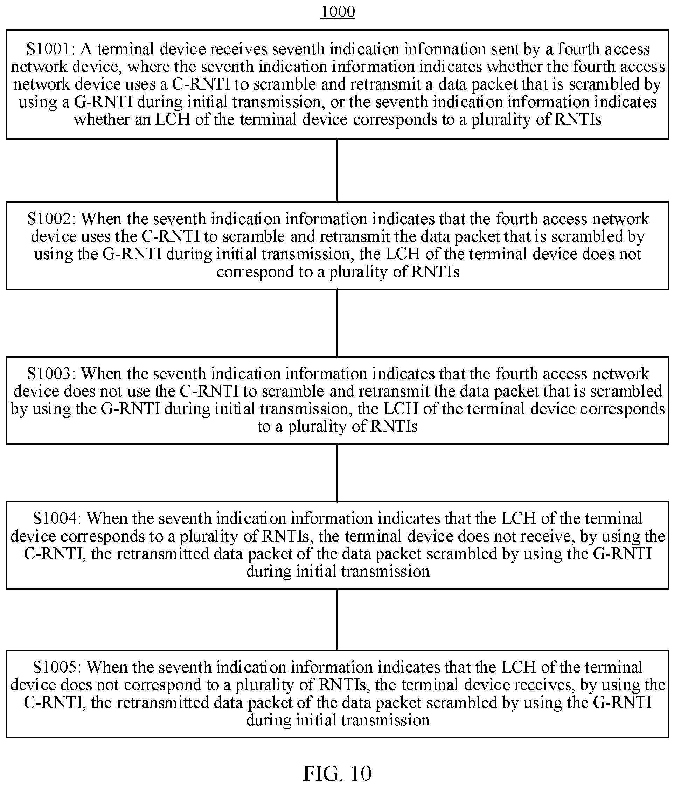

The following describes in detail the communication method provided in this application with reference to FIG. 10. FIG. 10 is a schematic flowchart of a communication method 1000 according to an embodiment of this application. The method 1000 may be applied to the scenario shown in FIG. 2.

S 1001: A terminal device receives seventh indication information sent by a fourth access network device, where the seventh indication information indicates whether the fourth access network device uses a C-RNTI to scramble and retransmit a data packet that is scrambled by using a G-RNTI during initial transmission, or the seventh indication information indicates whether an LCH of the terminal device corresponds to a plurality of RNTIs.

Correspondingly, the fourth access network device sends the seventh indication information to the terminal device.

S 1002: When the seventh indication information indicates that the fourth access network device uses the C-RNTI to scramble and retransmit the data packet that is scrambled by using the G-RNTI during initial transmission, the LCH of the terminal device does not correspond to a plurality of RNTIs.

Specifically, when the fourth access network device uses the C-RNTI to scramble and retransmit the data packet that is scrambled by using the G-RNTI during initial transmission, the LCH of the terminal device does not correspond to a plurality of RNTIs, that is, the terminal device does not involve LCH multiplexing.

For example, the fourth access network device is configured to transmit a first multicast service, the first multicast service corresponds to a first LCH and a first G-RNTI, the first LCH further corresponds to a second multicast service, and the second multicast service corresponds to a second G-RNTI. When the fourth access network device fails to send a first data packet of the first multicast service by using the first G-RNTI, before retransmitting the first data packet by using a C-RNTI, the fourth access network device may use the seventh indication information to indicate the terminal device to disable multiplexing of the first LCH or indicate a manner of retransmitting the first data packet, to ensure that the terminal device can map the first data packet to a correct MRB.

In a possible implementation, the fourth access network device directly indicates the terminal device to disable multiplexing of the first LCH.

In another possible implementation, the fourth access network device indicates that the data packet is to be retransmitted by using the C-RNTI, to indirectly indicate the terminal device to disable multiplexing of the first LCH.

S1003: When the seventh indication information indicates that the fourth access network device does not use the C-RNTI to scramble and retransmit the data packet that is scrambled by using the G-RNTI during initial transmission, the LCH of the terminal device corresponds to a plurality of RNTIs.

Specifically, when the fourth access network device does not use the C-RNTI to scramble and retransmit the data packet that is scrambled by using the G-RNTI during initial transmission, the LCH of the terminal device may correspond to a plurality of RNTIs, that is, the terminal device may involve LCH multiplexing.

For example, the fourth access network device is configured to transmit a first multicast service, the first multicast service corresponds to a first LCH and a first G-RNTI, the first LCH further corresponds to a second multicast service, and the second multicast service corresponds to a second G-RNTI. When the fourth access network device fails to send a first data packet of the first multicast service by using the first G-RNTI, the fourth access network device may further indicate, when retransmitting the first data packet by using the first G-RNTI, the terminal device to keep multiplexing of the first LCH.

In a possible implementation, the fourth access network device directly indicates the terminal device to keep multiplexing of the first LCH.

In another possible implementation, the fourth access network device indicates that the data packet is to be retransmitted by using the first G-RNTI, to indirectly indicate the terminal device to keep multiplexing of the first LCH.

S1004: When the seventh indication information indicates that the LCH of the terminal device corresponds to a plurality of RNTIs, the terminal device does not receive, by using the C-RNTI, the retransmitted data packet of the data packet scrambled by using the G-RNTI during initial transmission.

Specifically, when the fourth access network device indicates that the LCH of the terminal device may correspond to a plurality of G-RNTIs, that is, the fourth access network device indicates that the LCH of the terminal device is multiplexed, the terminal device does not use the C-RNTI to receive the retransmitted data packet of the data packet that is scrambled by using the G-RNTI during initial transmission.

For example, the fourth access network device is configured to transmit a first multicast service, the first multicast service corresponds to a first LCH and a first G-RNTI, the first LCH further corresponds to a second multicast service, and the second multicast service corresponds to a second G-RNTI. When the fourth access network device indicates that the LCH of the terminal device is multiplexed, that is, to keep multiplexing of the first LCH, the terminal device does not use the C-RNTI to receive a retransmitted data packet of a data packet that is scrambled by using the first G-RNTI during initial transmission, to avoid a conflict.

In a possible implementation, the fourth access network device directly indicates the terminal device to keep multiplexing of the first LCH.

In another possible implementation, the fourth access network device indicates that the data packet is to be retransmitted by using the first G-RNTI, to indirectly indicate the terminal device to keep multiplexing of the first LCH.

S1005: When the seventh indication information indicates that the LCH of the terminal device does not correspond to a plurality of RNTIs, the terminal device receives, by using the C-RNTI, the retransmitted data packet of the data packet scrambled by using the G-RNTI during initial transmission.

Specifically, when the fourth access network device indicates that the LCH of the terminal device does not correspond to a plurality of G-RNTIs, that is, the fourth access network device indicates that the LCH of the terminal device is not multiplexed, the terminal device receives, by using the C-RNTI, the retransmitted data packet of the data packet that is scrambled by using the G-RNTI during initial transmission.

For example, the fourth access network device is configured to transmit a first multicast service, the first multicast service corresponds to a first LCH and a first G-RNTI, the first LCH further corresponds to a second multicast service, and the second multicast service corresponds to a second G-RNTI. When the fourth access network device indicates that the LCH of the terminal device is not corresponding to a plurality of G-RNTIs, that is, multiplexing of the first LCH is disabled, because the terminal device disables multiplexing of the LCH, the terminal device may receive, by using the C-RNTI, the retransmitted data packet of the data packet that is scheduled by using the first G-RNTI.

In a possible implementation, the fourth access network device directly indicates the terminal device to disable multiplexing of the first LCH.

In another possible implementation, the fourth access network device indicates that the data packet is to be retransmitted by using the C-RNTI, to indirectly indicate the terminal device to disable multiplexing of the first LCH.

It should be understood that there is no specific sequence of S1002 to S 1005.

Optionally, the method 1000 further includes:
the terminal device sends eighth indication information to the fourth access network device, where the eighth indication information indicates whether the terminal device supports receiving, by using the C-RNTI, the retransmitted data packet of the data packet that is scrambled by using the G-RNTI during initial transmission.

In this embodiment of this application, based on the indication of the fourth access network device, the terminal device may finally determine whether the LCH is corresponding to a plurality of RNTIs or whether to receive, by using the C-RNTI, the retransmitted data packet of the data packet that is scrambled by using the G-RNTI during initial transmission. This avoids a case in which the terminal device cannot distinguish, based on only the LCH identifier, an RB or a service to which the data packet in HARQ retransmission belongs, thereby effectively avoiding a conflict between the two, and ensuring communication quality.

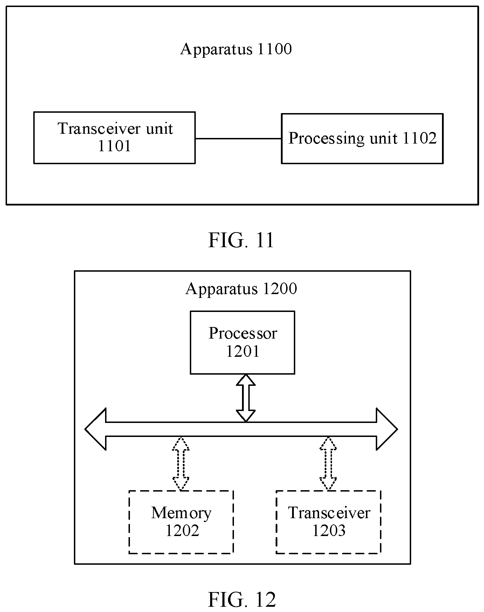

FIG. 11 and FIG. 12 are schematic block diagrams of communication apparatuses according to embodiments of this application. These apparatuses can implement functions of the terminal device or any access network device in the foregoing method embodiments, and therefore can also implement beneficial effects of the foregoing method embodiments. In embodiments of this application, the apparatus may be a terminal device, or may be an access network device.

FIG. 11 is a schematic block diagram of a communication apparatus according to an embodiment of this application. The apparatus 1100 includes a transceiver unit 1101, and optionally, may further include a processing unit 1102.

When the apparatus 1100 is configured to implement functions of the terminal device in the method embodiment in FIG. 3, the transceiver unit 1101 is configured to receive first indication information, where the first indication information indicates to adjust a receive window of a first packet data convergence protocol PDCP entity when the first PDCP entity is re-established. The processing unit 1102 is configured to adjust the receive window of the first PDCP entity based on the first indication information. Optionally, the processing unit 1102 is further configured to: when a reordering timer is started, deliver a data packet buffered by the first PDCP entity.

When the apparatus 1100 is configured to implement functions of the source node in the method embodiment in FIG. 3, the transceiver unit 1101 is configured to send first indication information to a terminal device, where the first indication information indicates to adjust a receive window of a first packet data convergence protocol PDCP entity when the first PDCP entity is re-established. The transceiver unit 1101 is further configured to send handover request information to the target node. The transceiver unit 1101 is further configured to receive handover request acknowledgment information sent by the target node.

When the apparatus 1100 is configured to implement functions of the target node in the method embodiment in FIG. 3, the transceiver unit 1101 is configured to receive handover request information. The transceiver unit 1101 is further configured to send handover request acknowledgment information to the source node.

When the apparatus 1100 is configured to implement functions of the source node in the method embodiment in FIG. 4, the transceiver unit 1101 is configured to send handover request information to the target node, and is further configured to receive handover request acknowledgment information of the target node. The processing unit 1102 is configured to: when it is determined that a progress of transmitting a first service by the target node is slower than a transmission progress of a first AM MRB, indicate the first terminal device to reconfigure the first AM MRB.

When the apparatus 1100 is configured to implement functions of the target node in the method embodiment in FIG. 4, the transceiver unit 1101 is configured to receive handover request information sent by the source node, and is further configured to send handover request acknowledgment information to the source node. The processing unit 1102 is configured to: when it is determined that a progress of transmitting a first service by the target node is faster than a transmission progress of a first AM MRB, indicate the first terminal device to configure a second AM MRB to transmit a data packet of the first service that has been transmitted by the target node.

When the apparatus 1100 is configured to implement functions of the terminal device in the method embodiment in FIG. 5, the transceiver unit 1101 is configured to send third information to the first access network device, where the third information indicates a resource used by the terminal device to receive a multicast service or a capability of supporting a multicast service.

When the apparatus 1100 is configured to implement functions of the first access network device in the method embodiment in FIG. 5, the transceiver unit 1101 is configured to receive third information sent by the terminal device, where the third information indicates a resource used by the terminal device to receive a multicast service or a capability of supporting a multicast service. The processing unit 1102 is configured to configure a DRB for the terminal device based on the third information, where the DRB is used to bear a unicast service.

When the apparatus 1100 is configured to implement functions of the third access network device in the method embodiment in FIG. 8, the transceiver unit 1101 is configured to send, to the terminal device, a first data packet sent by using a first G-RNTI. The processing unit 1102 is configured to: when a first preset condition is met, retransmit the first data packet by using a C-RNTI; or when a second preset condition is met, retransmit the first data packet by using the first G-RNTI.

When the apparatus 1100 is configured to implement functions of the terminal device in the method embodiment in FIG. 8, the transceiver unit 1101 is configured to receive a first data packet that is sent by the third access network device and that is sent by using a first G-RNTI.

When the apparatus 1100 is configured to implement functions of the fourth access network device in the method embodiment in FIG. 9, the transceiver unit 1101 is configured to send seventh indication information to the terminal device. The seventh indication information indicates whether the fourth access network device uses a C-RNTI to schedule a retransmitted data packet of a data packet scheduled by using a G-RNTI, or the seventh indication information indicates whether a logical channel of the terminal device corresponds to a plurality of G-RNTIs.

When the apparatus 1100 is configured to implement functions of the terminal device in the method embodiment in FIG. 9, the transceiver unit 1101 is configured to receive seventh indication information sent by the fourth access network device. The seventh indication information indicates whether the fourth access network device uses a C-RNTI to schedule a retransmitted data packet of a data packet scheduled by using a G-RNTI, or the seventh indication information indicates whether a logical channel of the terminal device corresponds to a plurality of G-RNTIs. The processing unit 1102 is configured to: when the seventh indication information indicates that the fourth access network device uses the C-RNTI to schedule the retransmitted data packet of the data packet scheduled by using the G-RNTI, the logical channel of the terminal device does not correspond to a plurality of G-RNTIs; or when the seventh indication information indicates that the fourth access network device does not use the C-RNTI to schedule the retransmitted data packet of the data packet scheduled by using the G-RNTI, the logical channel of the terminal device corresponds to a plurality of G-RNTIs; or when the seventh indication information indicates that the logical channel of the terminal device corresponds to a plurality of G-RNTIs, the terminal device does not use the C-RNTI to receive the retransmitted data packet of the data packet scheduled by using the G-RNTI; or when the seventh indication information indicates that the logical channel of the terminal device does not correspond to a plurality of G-RNTIs, the terminal device uses the C-RNTI to receive the retransmitted data packet of the data packet scheduled by using the G-RNTI.

For more detailed descriptions of the transceiver unit 1101 and the processing unit 1102, refer to related descriptions in the embodiments of the foregoing methods 300 to 900. Details are not described herein again.

FIG. 12 is a schematic block diagram of an apparatus 1200 according to an embodiment of this application. Any access network device and any terminal device in any one of the foregoing methods 300 to 900 may be implemented by the apparatus shown in FIG. 12.

It should be understood that the apparatus 1200 may be a physical device, a component (for example, an integrated circuit or a chip) of the physical device, or may be a function module in the physical device.

As shown in FIG. 12, the apparatus 1200 includes one or more processors 1201. The processor 1201 may store execution instructions for performing the method in embodiments of this application. Optionally, the processor 1201 may invoke an interface to implement receiving and sending functions. The interface may be a logical interface or a physical interface. This is not limited. For example, the interface may be a transceiver circuit or an interface circuit. The transceiver circuit or the interface circuit configured to implement the receiving and sending functions may be separated or may be integrated together. The transceiver circuit or the interface circuit may be configured to read and write code/data, or the transceiver circuit or the interface circuit may be configured to transmit or transfer a signal.

Optionally, the interface may be implemented by a transceiver. Optionally, the apparatus 1200 may further include a transceiver 1203. The transceiver 1203 may be referred to as a transceiver unit, a transceiver circuit, or the like, and is configured to implement receiving and sending functions.

Optionally, the apparatus 1200 may further include a memory 1202. A specific deployment location of the memory 1202 is not specifically limited in this embodiment of this application. The memory may be integrated into the processor, or may be independent of the processor. When the apparatus 1200 does not include the memory, the apparatus 1200 only needs to have a processing function, and the memory may be deployed at another location (for example, a cloud system).

The processor 1201, the memory 1202, and the transceiver 1203 communicate with each other through an internal connection path, to transfer a control and/or data signal.

It may be understood that, although not shown, the apparatus 1200 may further include another apparatus, for example, an input apparatus, an output apparatus, or a battery.

Optionally, in some embodiments, the memory 1202 may store execution instructions for performing the method in embodiments of this application. The processor 1201 may execute the instructions stored in the memory 1202, to complete, in combination with other hardware (for example, the transceiver 1203), steps performed in the following method. For specific working processes and beneficial effects, refer to descriptions in the following method embodiments.

The method disclosed in embodiments of this application may be applied to the processor 1201, or may be implemented by the processor 1201. The processor 1201 may be an integrated circuit chip and has a signal processing capability. In an implementation process, the steps of the method may be performed through a hardware integrated logic circuit in the processor or by using instructions in a form of software. The foregoing processor may be a general purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory, and a processor reads instructions in the memory and completes the steps in the foregoing methods in combination with hardware of the processor.

It may be understood that the memory 1202 may be a volatile memory or a nonvolatile memory, or may include both a volatile memory and a nonvolatile memory. The non-volatile memory may be a read-only memory ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory RAM, and may serve as an external cache. By way of example and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

In addition, in this application, the apparatus 1100 is presented in a form of function modules. The "module" herein may be an application-specific integrated circuit ASIC, a circuit, a processor that executes one or more software or firmware programs and a memory, an integrated logic circuit, and/or another component capable of providing the foregoing functions. In a simple embodiment, a person skilled in the art may figure out that the apparatus 1100 may be in a form shown in FIG. 11. The processing unit 1102 may be implemented by using the processor 1201 shown in FIG. 12. Optionally, if the computer device shown in FIG. 12 includes the memory 1202, the processing unit 1102 may be implemented by using the processor 1201 and the memory 1202. The transceiver unit 1101 may be implemented by using the transceiver 1203 shown in FIG. 12. The transceiver 1203 includes a receiving function and a sending function. Specifically, the processor executes a computer program stored in a memory to implement a function of the processing module. Optionally, when the apparatus 1100 is a chip, a function and/or an implementation process of the transceiver unit 1203 may be alternatively implemented by using a pin, a circuit, or the like. Optionally, the memory may be a storage unit on the chip, such as a register or a cache. The storage unit may be a storage unit that is in the computer device and that is located outside the chip, for example, the memory 1202 shown in FIG. 12, or may be a storage unit that is deployed in another system or device but not located in the computer device. A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

Various aspects or features of this application may be implemented as methods, apparatuses, or products using standard programming and/or engineering techniques. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine readable media" may include but is not limited to a radio channel, and various other media that can store, contain and/or carry an instruction and/or data.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented. All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner. It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It should be further understood that, in this application, "when" and "if" mean that UE or a base station performs corresponding processing in an objective situation, but do not constitute any limitation on time, do not require the UE or the base station to perform a determining action during implementation, and do not mean other limitations either.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists.

The term "at least one of..." in this specification represents all or any combination of the listed items. For example, "at least one of A, B, and C" may represent the following six cases: Only A exists, only B exists, only C exists, both A and B exist, both B and C exist, and A, B, and C all exist.

In this application, unless otherwise specified, "at least one" means one or more, and "a plurality of" means two or more.

It should be understood that in embodiments of this application, "B corresponding to A" represents that B is associated with A, and B may be determined based on A. However, it should be further understood that determining B based on A does not mean that B is determined based only on A. B may alternatively be determined based on A and/or other information.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a terminal device, the terminal device comprises a first multicast radio bearer MRB, the first MRB comprises a first packet data convergence protocol PDCP entity and a first RLC entity, the first RLC entity uses an acknowledged mode AM, and the method comprises:
receiving, by the terminal device, first indication information sent by a source node, wherein the first indication information indicates to adjust a receive window of the first PDCP entity when the first PDCP entity is re-established; and
adjusting, by the terminal device, the receive window of the first PDCP entity based on the first indication information.

2. The method according to claim 1, wherein the first indication information comprises second indication information, and the second indication information indicates that an area session ID of a target node is inconsistent with an area session ID of the source node; and
the adjusting, by the terminal device, the receive window of the first PDCP entity based on the first indication information comprises:
initializing, by the terminal device, a window parameter of the receive window of the first PDCP entity.

3. The method according to claim 1, wherein the first indication information comprises third indication information, and the third indication information indicates that PDCP serial numbers of a target node and the source node are not synchronized; and
the adjusting, by the terminal device, the receive window of the first PDCP entity based on the first indication information comprises:
initializing, by the terminal device, a window parameter of the receive window of the first PDCP entity.

4. The method according to claim 2 or 3, wherein the method further comprises:
when a reordering timer is started, delivering, by the terminal device, a data packet buffered by the first PDCP entity.

5. The method according to claim 1, wherein the first indication information comprises fourth indication information, and the fourth indication information indicates a hyper frame number HFN of a target node; and
the adjusting, by the terminal device, the receive window of the first PDCP entity based on the first indication information comprises:
adjusting, by the terminal device, a window parameter of the receive window of the first PDCP entity based on a difference between the HFN of the target node and an HFN of the source node.

6. The method according to any one of claims 1 to 5, wherein the first indication information is comprised in first information indicating node handover.

7. A communication method, wherein the method comprises:
sending, by a source node, first indication information to a terminal device, wherein the first indication information indicates to adjust a receive window of a first packet data convergence protocol PDCP entity when the first PDCP entity is re-established, the terminal device comprises a first multicast radio bearer MRB, the first MRB comprises the first PDCP entity and a first RLC entity, the first RLC entity uses an acknowledged mode AM, and the first PDCP entity is associated with the first RLC entity.

8. The method according to claim 7, wherein before the sending, by a source node, first indication information to a terminal device, the method further comprises:
sending, by the source node, handover request information to a target node; and
receiving, by the source node, the handover request acknowledgment information, wherein the handover request acknowledgment information comprises indication information indicating to adjust the receive window of the first PDCP entity.

9. The method according to claim 7 or 8, wherein the first indication information comprises second indication information, and the second indication information indicates that an area session ID of the target node is inconsistent with an area session ID of the source node.

10. The method according to claim 7 or 8, wherein the first indication information comprises third indication information, and the third indication information indicates that serial numbers of the target node and the source node are not synchronized.

11. The method according to claim 7 or 8, wherein the first indication information comprises fourth indication information, and the fourth indication information indicates an HFN of the target node.

12. The method according to any one of claims 7 to 11, wherein the first indication information is comprised in first information indicating node handover.

13. An apparatus comprising a module or unit configured to perform the method according to any one of claims 1 to 12.

14. An apparatus, comprising a processor, wherein the processor is configured to execute a computer program or instructions stored in a memory, to enable the apparatus to perform the method according to any one of claims 1 to 12.

15. A computer-readable storage medium, wherein the computer-readable storage medium stores a computer program or instructions, and when the computer program or the instructions are run on a computer, the computer is enabled to perform the method according to any one of claims 1 to 12.

16. A computer program product, wherein the computer program product comprises a computer program or instructions used to perform the method according to any one of claims 1 to 12.

17. A chip, wherein the chip is coupled to a memory, and is configured to read and execute program instructions stored in the memory, to implement the method according to any one of claims 1 to 12.
